(19) Europäisches Patentamt
European Patent Office
Office européen des brevets

(11) **EP 4 183 663 B1**

(12) **EUROPEAN PATENT SPECIFICATION**

(45) Date of publication and mention
of the grant of the patent:
**11.09.2024  Bulletin 2024/37**

(21) Application number: **20946476.7**

(22) Date of filing: **24.07.2020**

(51) International Patent Classification (IPC):
**B62D 5/00** *(2006.01)*    B62D 5/04 *(2006.01)*

(52) Cooperative Patent Classification (CPC):
**B62D 5/001;** B62D 5/003

(86) International application number:
**PCT/CN2020/104608**

(87) International publication number:
**WO 2022/016553 (27.01.2022 Gazette 2022/04)**

(54) **STEER-BY-WIRE SYSTEM AND STEERING CONTROL METHOD**

STEER-BY-WIRE-LENKSYSTEM UND LENKSTEUERUNGSVERFAHREN

SYSTÈME DE DIRECTION À COMMANDE ÉLECTRIQUE ET PROCÉDÉ DE COMMANDE DE DIRECTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.05.2023  Bulletin 2023/21**

(73) Proprietor: **Huawei Technologies Co., Ltd.
Shenzhen, Guangdong 518129 (CN)**

(72) Inventors:
• **LING, Mingze
  Shenzhen, Guangdong 518129 (CN)**
• **ZHANG, Yongsheng
  Shenzhen, Guangdong 518129 (CN)**
• **LI, Jie
  Shenzhen, Guangdong 518129 (CN)**
• **LIU, Donghao
  Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(56) References cited:
CN-A- 110 254 502        CN-A- 110 254 502
CN-U- 203 111 299        CN-U- 208 344 320
DE-A1- 102018 221 490    DE-A1- 102018 221 490
DE-B3- 102013 014 133    DE-B3- 102013 014 133

**Description**

**TECHNICAL FIELD**

This application relates to the field of vehicle steering technologies, and in particular, to a steer-by-wire system and a steering control method.

**BACKGROUND**

A steer-by-wire system is a system for controlling vehicle steering by using an electrical signal, and a mechanical connection apparatus between a steering wheel and a steerable wheel is canceled.

The steer-by-wire system mainly includes a steering controller, a steering driving motor, a steering wheel, a steering column, and the like. An output shaft of the steering driving motor is connected to the steerable wheel through rotation. The steering wheel is installed at an end of the steering column. The steering column has a sensor for collecting a rotation angle and torque of the steering wheel. In this way, when a driver operates the steering wheel, the steering controller may obtain the rotation angle and torque of the steering wheel by using the sensor, and then may control, based on the rotation angle and torque of the steering wheel, the steering driving motor to drive the steerable wheel to steer.

Because the steerable wheel has a rotation range, when rotating to a limit position, the steerable wheel cannot continue to rotate, but the steering wheel can rotate without a limitation. In this way, a rotation range of the steering wheel may be inconsistent with the rotation range of the steerable wheel, which affects operation and control of the driver on vehicle steering. Document DE 10 2013 014 133 B3 is considered the closest prior art and discloses the features of the preamble of claim 1.

**SUMMARY**

This application provides a steer-by-wire system and a steering control method, to overcome a problem in the conventional technology that a steerable wheel has a rotation range limitation but a steering wheel does not have a rotation range limitation. Technical solutions are as follows.

According to an aspect, a steer-by-wire system is provided, where the steer-by-wire system includes a steering column and a limiting apparatus. The limiting apparatus includes a fixed rod, a slide block, and a movable limiting block. The slide block is located on the fixed rod, and the slide block can slide on the fixed rod as the steering column rotates. The movable limiting block is located on the fixed rod, and can slide on the fixed rod, to limit the slide block to slide on the fixed rod. Therefore, the steering column rotates within a target rotation range.

In an example, the steer-by-wire system may further include a steering wheel. The steering wheel is fixed at an end of the steering column. The steering column may synchronously rotate with the steering wheel. For example, when the steering wheel rotates, the steering column can be driven to synchronously rotate; and when the steering column rotates, the steering wheel can also be driven to synchronously rotate, so that a rotation angle of the steering column may be used to represent a rotation angle of the steering wheel, and torque of the steering column may also be used to represent torque of the steering wheel. Therefore, in this specification, the rotation angle of the steering column may be equivalent to the rotation angle of the steering wheel, and a rotation range of the steering column may be equivalent to a rotation range of the steering wheel.

To obtain the rotation angle and the torque of the steering wheel, a rotation angle sensor and a torque sensor may be installed on the steering column. Correspondingly, the torque sensor and the rotation angle sensor are installed on the steering column. The torque sensor can collect torque generated during rotation of the steering column. The rotation angle sensor can collect a rotation angle generated during rotation of the steering column. The torque and the rotation angle of the steering column may be respectively used as the torque and the rotation angle of the steering wheel.

In an example, a steering driving motor of the steer-by-wire system is connected to a steerable wheel of a vehicle. The steerable wheel may be a left front wheel and a right front wheel of the vehicle. In this way, after obtaining the torque and the rotation angle of the steering wheel by using the torque sensor and the rotation angle sensor, a steering controller of the steer-by-wire system may control a steering driving apparatus to drive the steerable wheel to steer, to implement wire control steering of the vehicle.

Rotation of the steerable wheel is limited, and the steerable wheel cannot rotate without a limitation. Therefore, to adapt to the rotation of the steerable wheel, rotation of the steering wheel also needs to be limited. Correspondingly, the steer-by-wire system further includes the limiting apparatus. The limiting apparatus may limit the rotation of the steering wheel through sliding of the slide block and the movable limiting block on the fixed rod and a rotation connection between the slide block and the steering column, so that the steering wheel rotates within a target rotation range. The target rotation range is obtained through calculation based on a traveling parameter of a vehicle in which the steer-by-wire system is located.

It can be learned that the steer-by-wire system may use the limiting apparatus to limit the rotation of the steering wheel, so that the steering wheel no longer rotates without a limitation, but rotates within the target rotation range corresponding to the rotation range of the steerable wheel. In this way, the rotation range of the steering wheel is consistent with the rotation range of the steerable wheel. Therefore, when the steerable wheel rotates to a limit position, the steering wheel also rotates to a limit position. This facilitates operation and control of a driver on vehicle steering, and facilitates driving safety.

In a possible implementation, the limiting apparatus further includes a gear. The gear is sleeved on the steering column and synchronously rotates with the steering column. The slide block has a rack that engages with the gear. The slide block engages with the gear. When the gear rotates with the steering column, the gear pushes the slide block to slide on the fixed rod.

In an example, the slide block is sleeved on the fixed rod, an outer wall of the slide block engages with the gear, and the gear is sleeved on the steering column and can move synchronously with the steering column. In this way, when the steering column rotates, the gear sleeved on the steering column also rotates with the steering column. Because the gear engages with the slide block, the slide block can be pushed to slide on the fixed rod when the gear rotates. In addition, when the slide block slides on the fixed rod, the gear may be pushed to rotate. The gear and the steering column synchronously rotate, thereby implementing a rotation connection between the slide block and the steering column.

It can be learned that the rotation connection between the slide block and the steering column means that rotation of the steering column can be driven when the slide block slides and moves on the fixed rod, and that rotation of the steering column can also drive the slide block to slide and move on the fixed rod.

In addition, because there is a rotation connection between the slide block and the steering column, a slide range of the slide block on the fixed rod may be limited to limit a rotation range of the steering column. The rotation range of the steering column may be used to represent the rotation range of the steering wheel, so that sliding of the slide block may be limited, to limit the rotation range of the steering wheel.

When sliding to be in contact with the slide block, the movable limiting block can be locked on the fixed rod, to limit sliding of the slide block, so that the slide block cannot continue to slide in a direction toward the movable limiting block. It can be learned that the movable limiting block can limit the slide range of the slide block. Once the slide range of the slide block is limited, the rotation range of the steering column is limited. The steering column synchronously rotates with the steering wheel, so that the rotation range of the steering wheel is also limited.

It can be learned that the movable limiting block of the limiting apparatus may limit the slide range of the slide block to further limit the rotation range of the steering wheel, so that the steering wheel rotates within the target rotation range.

In a possible implementation, the fixed rod is a screw, and both the slide block and the movable limiting block are ball nuts. Both the slide block and the movable limiting block are sleeved on the fixed rod. The slide block and the movable limiting block can spirally slide on the fixed rod.

Both the slide block and the movable limiting block are ball nuts, and the fixed rod is a screw. In this way, the slide block spirally slides on the screw, and the movable limiting block spirally slides on the screw. In addition, a ball is in a spiral groove of the slide block, and a ball is in a spiral groove of the movable limiting block, to reduce wear between the slide block and the fixed rod, reduce wear between the movable limiting block and the fixed rod, and prolong a service life of the limiting apparatus.

In a possible implementation, the steer-by-wire system further includes a slide driving motor. The slide driving motor drives the movable limiting block to slide on the fixed rod.

In an example, the steer-by-wire system may include one slide driving motor. The slide driving motor is configured to drive the foregoing plurality of movable limiting blocks to slide on the fixed rod. Alternatively, a quantity of slide driving motors may be the same as a quantity of movable limiting blocks. Each movable limiting block is driven by using one slide driving motor. This embodiment sets no limitation on the quantity of slide driving motors included in the steer-by-wire system. A skilled person may flexibly select the quantity based on an actual situation.

In an example, when the movable limiting block limits the slide block, if the slide driving motor drives the movable limiting block to be in contact with the slide block, the slide driving motor still continues to drive the movable limiting block to maintain contact between the movable limiting block and the slide block, to apply thrust to the slide block, so as to prevent the slide block from continuing to slide.

In a possible implementation, the movable limiting block is further configured to: when the rotation angle of the steering wheel is inconsistent with a rotation angle of the steerable wheel, push the slide block to slide on the fixed rod, so that the slide block drives the steering column to rotate, to correct a rotation angle deviation between the steering wheel and the steerable wheel.

Because the rotation angle of the steering column may be equal to the rotation angle of the steering wheel, consistency between the rotation angle of the steering wheel and the rotation angle of the steerable wheel may also be referred to as consistency between the rotation angle of the steering column and the rotation angle of the steerable wheel, and inconsistency between the rotation angle of the steering wheel and the rotation angle of the steerable wheel may also be referred to as inconsistency between the rotation angle of the steering column and the rotation angle of the steerable wheel.

The consistency between the rotation angle of the steering wheel and the rotation angle of the steerable wheel means that a correspondence between the rotation angle of the steering wheel and the rotation angle of the steerable wheel meets a pre-stored target correspondence between the rotation angle of the steering wheel and the rotation angle of the steerable wheel. The inconsistency means that the correspondence between the rotation angle of the steering wheel and the rotation angle of the steerable wheel does not meet the target correspondence.

In an example, the steering controller of the steer-by-wire system obtains a current rotation angle of the steering wheel by using the rotation angle sensor, obtains a current rotation angle of the steerable wheel by using a rotation angle sensor installed on the steerable wheel, and detects whether a correspondence between the current rotation angle of the steering wheel and the current rotation angle of the steerable wheel is consistent with the pre-stored target correspondence. If the correspondence between the current rotation angle of the steering wheel and the current rotation angle of the steerable wheel is inconsistent with the pre-stored target correspondence, the steering controller may calculate a rotation angle deviation between the current rotation angle of the steering wheel and the current rotation angle of the steerable wheel; and then control, based on the rotation angle deviation, a corresponding movable limiting block to push the slide block to slide on the fixed rod in a direction used to eliminate the rotation angle deviation. Because there is a rotation connection between the slide block and the steering column, the steering column can rotate, to eliminate the rotation angle deviation between the steering wheel and the steerable wheel.

It can be learned that the rotation angle of the steering wheel may be adjusted to be consistent with that of the steerable wheel, to alleviate tire wear generated by adjustment of the steerable wheel, and protect a tire. Dynamic adjustment of the rotation angle of the steering wheel and the rotation angle of the steerable wheel can improve precision of alignment between the steering wheel and the steerable wheel.

In a possible implementation, the movable limiting block is further configured to: when it is detected that the steering wheel intends to return and a return driving motor of the steer-by-wire system fails, push the slide block to slide on the fixed rod, so that the slide block drives the steering column to rotate, and the steering wheel returns.

In a process in which the steering wheel returns, a slide speed of the movable limiting block may be controlled to control an automatic return speed of the steering wheel.

In an example, when a wire control steering detects that the steering wheel intends to return and the return driving motor fails and cannot drive the steering column to drive the steering wheel to automatically return, a corresponding movable limiting block may be controlled to push the slide block to slide in a direction that enables the steering wheel to automatically return, so that the steering wheel automatically returns during sliding of the slide block. It can be learned that even if the return driving motor that drives the steering wheel to automatically return fails, automatic return of the steering wheel can be implemented.

In a possible implementation, the target rotation range is specifically obtained through calculation based on the rotation range of the steerable wheel and a stored steering ratio. The steering ratio is a ratio of the rotation angle of the steering wheel to the rotation angle of the steerable wheel. The rotation range of the steerable wheel is a rotation range that is obtained through calculation based on a traveling parameter of the vehicle in a working condition and that is less than or equal to a limit rotation range of the steerable wheel. The traveling parameter includes a speed of the vehicle and a maximum yaw rate of the vehicle in the working condition. The limit rotation range of the steerable wheel is an attribute value of the vehicle.

In an example, a maximum rotation angle of the steerable wheel in the working condition may be calculated based on the traveling parameter of the vehicle in the working condition, and the maximum rotation angle is less than or equal to a limit rotation angle of the steerable wheel. The rotation range of the steerable wheel is obtained based on a rotation direction of the steerable wheel. Then, a maximum rotation angle of the steering wheel may be calculated based on the pre-stored steering ratio and the maximum rotation angle that is of the steerable wheel and that is less than or equal to the limit rotation angle. Afterwards, the target rotation range of the steering wheel is obtained based on a rotation direction of the steering wheel.

The rotation range of the steerable wheel obtained based on the limit rotation angle and the rotation direction of the steerable wheel is the limit rotation range of the steerable wheel. In this case, the rotation angle that is of the steering wheel and that is obtained based on the limit rotation angle of the steerable wheel and the steering ratio is referred to as a limit rotation angle of the steering wheel, and the target rotation range that is of the steering wheel and that is obtained based on the limit rotation angle and the rotation direction of the steering wheel is a limit rotation range of the steering wheel.

In a possible implementation, the steer-by-wire system further includes a fixed limiting block. The fixed limiting block is fixed at an end of the fixed rod, and is configured to limit the movable limiting block to slide on the fixed rod, to limit the steering wheel to rotate within the limit rotation range. The limit rotation range of the steering wheel is a maximum target rotation range of the steering wheel, and is obtained through calculation based on the limit rotation range of the steerable wheel.

When the movable limiting block limits the steering wheel, because the movable limiting block can also slide on the fixed rod, if the driver operates the steering wheel with excessive strength, the slide block may push the movable limiting block to slide on the fixed rod. As a result, the movable limiting block cannot limit sliding of the slide block.

To avoid occurrence of the foregoing situation and enable the steering wheel to have the limit rotation range, correspondingly, the steer-by-wire system further includes the fixed limiting block. The fixed limiting block is fixed at the end of the fixed rod, and is configured to limit the movable limiting block to slide on the fixed rod, to limit the steering wheel to rotate within the limit rotation range.

When the target rotation range of the steering wheel is the limit rotation range of the steering wheel, if the steering wheel rotates clockwise to the maximum rotation angle, the movable limiting block on a left side is in contact with the fixed limiting block on the left side; and if the steering wheel rotates counterclockwise to the maximum rotation angle, the movable limiting block on a right side is in contact with the fixed limiting block on the right side. A distance between the two movable limiting blocks is a limit slide range of the slide block on the fixed rod.

According to another aspect, this application further provides a steering control method, where the method is applied to the foregoing steer-by-wire system, and the method includes:

obtaining a target rotation range of a steering column;

obtaining, based on a correspondence between a rotation range of the steering column and a slide range of a movable limiting block, a target slide range that is of the movable limiting block and that corresponds to the target rotation range of the steering column; and

controlling the movable limiting block to slide within the target slide range, to limit a slide block to slide on a fixed rod, so that the steering column rotates within the target rotation range.

In an example, the steering controller may first obtain a traveling parameter of a vehicle in which the steering controller is located, calculate a rotation range of a steerable wheel in a working condition based on the traveling parameter, and then calculate a target rotation range of the steering wheel. A correspondence between a rotation range of the steering wheel and the slide range of the movable limiting block is pre-stored in the steer-by-wire system. After calculating the target rotation range of the steering wheel, the steering controller may find a target slide range that is of the movable limiting block and that corresponds to the target rotation range of the steering wheel.

After finding the target slide range of the movable limiting block, the steering controller may control the slide driving motor of the movable limiting block to drive the movable limiting block to move to a target position. A distance between a default position and the target position of the movable limiting block is the target slide range of the movable limiting block, and the default position of the movable limiting block is a position at which the movable limiting block is in contact with the fixed limiting block. Two movable limiting blocks slide within the target slide range. This limits the slide block to slide within a specific range, thereby limiting the steering wheel to rotate within the target rotation range.

It can be learned that the steer-by-wire system may use the limiting apparatus to limit rotation of the steering wheel, so that the steering wheel no longer rotates without a limitation, but rotates within the target rotation range corresponding to the rotation range of the steerable wheel. Therefore, when the steerable wheel rotates to a limit position, the steering wheel also rotates to a limit position, so that the rotation of the steering wheel is consistent with rotation of the steerable wheel. This facilitates operation and control of a driver on vehicle steering, and facilitates driving safety.

In a possible implementation, the obtaining a target rotation range of the steering column includes:

obtaining a traveling parameter of a vehicle in which the steer-by-wire system is located and a limit rotation range of the steerable wheel of the vehicle;

using, as the rotation range of the steerable wheel, a rotation range that is obtained through calculation based on the traveling parameter and that is less than or equal to the limit rotation range of the steerable wheel; and

calculating the target rotation range of the steering column based on the rotation range of the steerable wheel and a stored steering ratio.

The traveling parameter includes a speed of the vehicle and a maximum yaw rate of the vehicle in a working condition. The limit rotation range of the steerable wheel is an attribute value of the vehicle. The steering ratio is a ratio of a rotation angle of the steering wheel to a rotation angle of the steerable wheel.

Because the steerable wheel has a limit rotation range, correspondingly, a rotation range that is obtained through calculation based on the traveling parameter and that is less than or equal to the limit rotation range of the steerable wheel may be used as the rotation range of the steerable wheel. Then, the target rotation range of the steering wheel is calculated based on the rotation range of the steerable wheel and the pre-stored steering ratio. The steering ratio is a ratio of the rotation angle of the steering wheel to the rotation angle of the steerable wheel, namely, a correspondence between the rotation angle of the steering wheel and the rotation angle of the steerable wheel.

In a possible implementation, the method further includes:

obtaining a current rotation angle of the steering wheel, a current rotation angle of the steerable wheel, and a stored target correspondence between the rotation angle of the steering wheel and the rotation angle of the steerable wheel; when it is detected that a correspondence between the current rotation angle of the steering wheel and the current rotation angle of the steerable wheel does not meet the target correspondence, determining that the rotation angle of the steering wheel is inconsistent with the rotation angle of the steerable wheel; and controlling, based on a rotation angle deviation between the current rotation angle of the steering wheel and the current rotation angle of the steerable wheel, the movable limiting block to push the slide block to slide on the fixed rod; and when it is detected that the correspondence between the current rotation angle of the steering wheel and the current rotation angle of the steerable wheel meets the target correspondence, determining that the rotation angle of the steering wheel is consistent with the rotation angle of the steerable wheel, and controlling the movable limiting block to stop pushing the slide block to slide on the fixed rod.

It can be learned that in a process in which the steering wheel and the steerable wheel rotate, when there is misalignment between steering of the steering wheel and steering of the steerable wheel, that is, the pre-stored correspondence is not met, the movable limiting block may further push the slide block to slide, so that the steering wheel rotates to eliminate a deviation between steering of the steering wheel and steering of the steerable wheel, and improve precision of alignment between steering of the steering wheel and steering of the steerable wheel.

In a possible implementation, the method further includes:

when it is detected that the steering wheel intends to return and a return driving motor of the steer-by-wire system fails, controlling the movable limiting block to push the slide block to slide on the fixed rod; and when it is detected that the steering wheel returns, controlling the movable limiting block to stop pushing the slide block to slide on the fixed rod.

It can be learned that, even if the return driving motor that drives the steering wheel to automatically return fails due to a fault, the limiting apparatus can drive the steering wheel to automatically return, thereby ensuring an automatic return function of the steering wheel.

According to another aspect, a vehicle is further provided, and the vehicle may include the foregoing steer-by-wire system.

According to another aspect, a controller is further provided, and the controller may be configured to perform the foregoing steering control method.

In embodiments of this application, the steer-by-wire system may use the limiting apparatus to limit the rotation of the steering wheel, so that the steering wheel no longer rotates without a limitation, but rotates within the target rotation range corresponding to the rotation range of the steerable wheel. In this way, the rotation range of the steering wheel is consistent with the rotation range of the steerable wheel. Therefore, when the steerable wheel rotates to a limit position, the steering wheel also rotates to a limit position. This facilitates operation and control of a driver on vehicle steering, and facilitates driving safety.

## BRIEF DESCRIPTION OF DRAWINGS

FIG. 1 is a schematic diagram of a structure of a steer-by-wire system according to an embodiment of this application;
FIG. 2 is a schematic diagram of a structure of a steer-by-wire system according to an embodiment of this application;
FIG. 3 is a schematic diagram of a structure of a rotation connection between a gear of a limiting apparatus and a slide block according to an embodiment of this application;
FIG. 4 is a schematic diagram of a structure of a steer-by-wire system according to an embodiment of this application;
FIG. 5 is a schematic diagram of a structure of a steer-by-wire system according to an embodiment of this application;
FIG. 6 is a schematic diagram of a structure in which a movable limiting block and a fixed limiting block that are on a left side limit clockwise rotation of a gear according to an embodiment of this application;
FIG. 7 is a schematic diagram of a structure in which a movable limiting block and a fixed limiting block that are on a right side limit counterclockwise rotation of a gear according to an embodiment of this application;
FIG. 8 is a schematic diagram of a structure in which a fixed limiting block and a movable limiting block limit sliding of a slide block according to an embodiment of this application;
FIG. 9 is a schematic diagram of a structure in which a movable limiting block pushes a slide block to slide rightward to cause counterclockwise rotation of a gear according to an embodiment of this application;

FIG. 10 is a schematic diagram of a structure in which a movable limiting block pushes a slide block to slide leftward to cause clockwise rotation of a gear according to an embodiment of this application;

FIG. 11 is a schematic diagram of a structure of a steer-by-wire system according to an embodiment of this application;

FIG. 12 is a schematic diagram of a steering control procedure according to an embodiment of this application;

FIG. 13 is a schematic diagram of a procedure for correcting a rotation angle deviation between a steering wheel and a steerable wheel according to an embodiment of this application;

FIG. 14 is a schematic diagram of a procedure for limiting clockwise rotation and counterclockwise rotation of a steering wheel according to an embodiment of this application; and

FIG. 15 is a schematic diagram of a procedure in which a steering wheel returns and a steering wheel is limited when a driving motor fails according to an embodiment of this application.

Reference numerals

1. steering wheel; 2. steering column; 3. limiting apparatus; 4. return driving motor; 21. torque sensor; 22. rotation angle sensor; 31. fixed rod; 32. slide block; 33. movable limiting block; 34. gear; 35. slide driving motor; 36. fixed limiting block; 37. damper; 33A. first movable limiting block; 33B. second movable limiting block; 35A. first slide driving motor; and 35B. second slide driving motor.

## DESCRIPTION OF EMBODIMENTS

Embodiments of this application provide a steer-by-wire system. The steer-by-wire system may be applied to an intelligent car, a new energy car, or a self-driving car. These cars may be collectively referred to as vehicles. The steer-by-wire system is a system for controlling vehicle steering by using an electrical signal, and a mechanical connection apparatus between a steering wheel and a steerable wheel is canceled, so that rotation of the steering wheel and rotation of the steerable wheel are independent of each other. The embodiments provide a steer-by-wire system, which can control a rotation range of the steering wheel, can maintain consistence between steering of the steering wheel and steering of the steerable wheel, can control automatic return of the steering wheel, and so on.

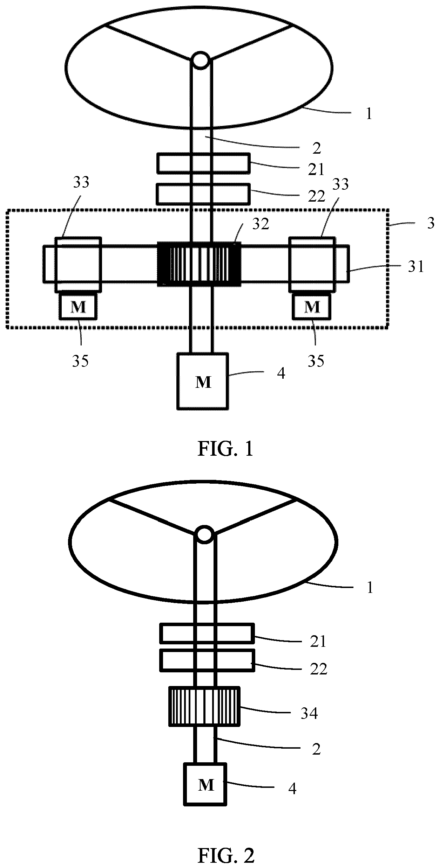

As shown in FIG. 1, the steer-by-wire system includes a steering wheel 1, a steering column 2, and a limiting apparatus 3. The limiting apparatus 3 includes a fixed rod 31, a slide block 32, and a movable limiting block 33. The steering wheel 1 is located at an end of the steering column 2. The slide block 32 is located on the fixed rod 31, and the slide block 32 can slide on the fixed rod 31. The slide block 32 is connected to the steering column 2 through rotation, so that when the steering column 2 rotates with the steering wheel 1, the slide block 32 can slide on the fixed rod 31 with rotation of the steering column 2. The movable limiting block 33 is located on the fixed rod 31, and the movable limiting block 33 can slide on the fixed rod 31, to limit the slide block 32 to slide on the fixed rod 31, so that the steering wheel 1 rotates within a target rotation range. The target rotation range is obtained through calculation based on a traveling parameter of a vehicle in which the steer-by-wire system is located.

The limiting apparatus 3 may be configured to limit the steering wheel 1, so that the steering wheel 1 may change from "rotating without a limitation" to "having a rotation range", to limit steering of the steering wheel 1. The limiting apparatus 3 may be further configured to correct a rotation angle of the steering wheel 1 when there is a rotation angle deviation between the steering wheel 1 and a steerable wheel, so that steering of the steering wheel 1 is consistent and aligned with steering of the steerable wheel. The limiting apparatus 3 may be further configured to enable the steering wheel 1 to automatically return. For a specific implementation structure and process, refer to the following description.

In an example, as shown in FIG. 1, the steering wheel 1 is fixed at the end of the steering column 2, and the steering column 2 can rotate synchronously with the steering wheel 1. For example, when the steering wheel 1 rotates, the steering column 2 can be driven to synchronously rotate; and when the steering column 2 rotates, the steering wheel 1 can also be driven to synchronously rotate, so that a rotation angle of the steering column 2 may be used to represent the rotation angle of the steering wheel 1, and torque of the steering column 2 may also be used to represent torque of the steering wheel 1. Therefore, in this specification, the rotation angle of the steering column may be equivalent to the rotation angle of the steering wheel, and a rotation range of the steering column may be equivalent to a rotation range of the steering wheel.

Correspondingly, to obtain the rotation angle and torque of the steering wheel 1, a rotation angle sensor and a torque sensor may be installed on the steering column 2. Correspondingly, as shown in FIG. 1, a torque sensor 21 and a rotation angle sensor 22 are installed on the steering column 2. The torque sensor 21 can collect torque generated during rotation of the steering column 2. The rotation angle sensor 22 can collect a rotation angle generated during rotation of the steering column 2. The torque and the rotation angle of the steering column 2 may be respectively used as the torque and the rotation angle of the steering wheel 1. Both the torque sensor 21 and the rotation angle sensor 22 may send collected data to a steering controller of the steer-by-wire system, so that the steering controller obtains operation performed by a driver on the steering wheel 1, and controls steering and straight-moving of a vehicle based on the operation performed by the driver.

The steering controller of the steer-by-wire system may be a controller in the steer-by-wire system, and is configured to control vehicle steering; or may be an entire vehicle controller of a vehicle in which the steer-by-wire system is located. This is not limited in this embodiment.

In an example, a steering driving motor of the steer-by-wire system is connected to a steerable wheel of the vehicle. The steerable wheel may be a left front wheel and a right front wheel of the vehicle. In this way, after obtaining the torque and the rotation angle of the steering wheel 1 by using the torque sensor 21 and the rotation angle sensor 22, the steering controller of the steer-by-wire system may control a steering driving apparatus to drive the steerable wheel to steer, to implement wire control steering of the vehicle.

Rotation of the steerable wheel is limited, and the steerable wheel cannot rotate without a limitation. Therefore, to adapt to the rotation of the steerable wheel, rotation of the steering wheel 1 also needs to be limited. Correspondingly, as shown in FIG. 1, the steer-by-wire system further includes the limiting apparatus 3. The limiting apparatus 3 may limit the rotation of the steering wheel 1 through sliding of the slide block 32 and the movable limiting block 33 on the fixed rod 31 and a rotation connection between the slide block 32 and the steering column 2, so that the steering wheel 1 rotates within a target rotation range. The target rotation range is obtained through calculation based on a traveling parameter of a vehicle in which the steer-by-wire system is located.

First, a specific implementation structure of the limiting apparatus is described, and then a process of calculating the target rotation range of the steering wheel 1 is described.

For ease of description of this embodiment, azimuth or position relationships indicated by "left", "right", "clockwise", "counterclockwise", and the like are introduced, which are all based on azimuth or position relationships shown in the accompanying drawings. This is merely for ease of description of this solution, and is not specifically limited. In addition, "first", "second", and the like in this specification are only used for description, and cannot be understood as an indication or implication of relative importance.

As shown in FIG. 1, the slide block 32 is located on the fixed rod 31, and can slide leftward and rightward on the fixed rod 31. An installation manner of the slide block 32 and the fixed rod 31 may be as follows: The slide block 32 may have a tubular structure and be sleeved on the fixed rod 31, so that the slide block 32 can slide leftward and rightward along the fixed rod 31. To reduce friction between the slide block 32 and the fixed rod 31, the slide block 32 may be a ball nut, and the fixed rod 31 may be a screw having a thread, so that the slide block 32 can spirally slide leftward and rightward on the fixed rod 31. In addition, a ball is in a spiral groove of the slide block 32, to reduce wear between the slide block 32 and the fixed rod 31, and prolong a service life of the limiting apparatus 3.

To implement that the steering column 2 can rotate when the slide block 32 slides on the fixed rod 31, and that the slide block 32 can slide on the fixed rod 31 when the steering column 2 rotates, correspondingly, there may be a rotation connection between the slide block 32 and the steering column 2. The rotation connection means that the steering column 2 may be driven to rotate when the slide block 32 slides as a main part, and that the slide block 32 may be driven to slide when the steering column 2 rotates as a main part. Movement of the slide block 32 and movement of the steering column 2 are related and form a rotation connection.

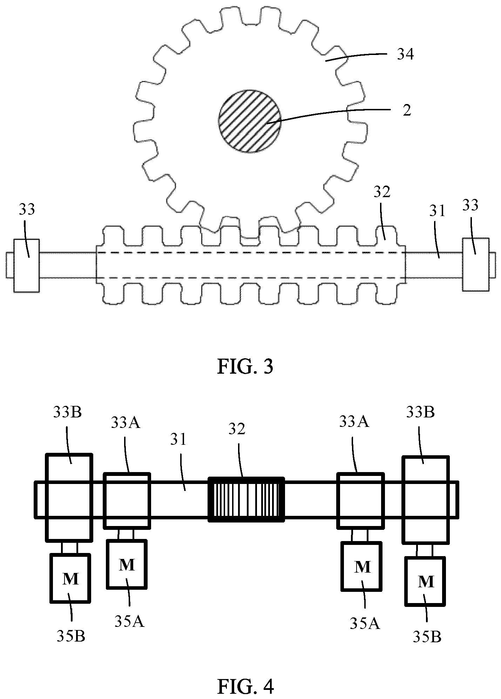

The rotation connection between the slide block 32 and the steering column 2 may be implemented through a threaded connection. Correspondingly, as shown in FIG. 2, the limiting apparatus 3 may further include a gear 34. The gear 34 is sleeved on the steering column 2 and synchronously rotates with the steering column 2. As shown in FIG. 3, the slide block 32 has a rack that engages with the gear 34. The slide block 32 engages with the gear 34 to implement the rotation connection with the steering column 2. For example, when the gear 34 rotates with the steering column 2, the gear 34 may push the slide block 32 to slide on the fixed rod 31. For another example, when the slide block 32 slides on the fixed rod 31, the slide block 32 may push the gear 34 to rotate, and the gear 34 can synchronously rotate with the steering column 2 because the gear 34 is sleeved on the steering column 2.

The slide block 32 is sleeved on the fixed rod 31, an outer wall of the slide block 32 engages with the gear 34, and the gear 34 is sleeved on the steering column 2 and can synchronously move with the steering column 2. In this way, when the steering column 2 rotates, the gear 34 may push the slide block 32 to slide on the fixed rod 31; and when the slide block 32 slides on the fixed rod 31, the gear 34 may be pushed to rotate. Rotation of the gear 34 is rotation of the steering column 2, thereby implementing the rotation connection between the slide block 32 and the steering column 2.

It can be learned that the rotation connection between the slide block 32 and the steering column 2 means that rotation of the steering column 2 can be driven when the slide block 32 slides and moves the fixed rod 31, and that rotation of the steering column 2 can also drive the slide block 32 to slide and move on the fixed rod 31.

In addition, because there is a rotation connection between the slide block 32 and the steering column 2, a slide range of the slide block 32 on the fixed rod 31 may be limited to limit a rotation range of the steering column 2. The rotation range of the steering column 2 may be used to represent the rotation range of the steering wheel 1. Therefore, sliding of the slide block 32 may be limited to limit the rotation range of the steering wheel 1.

Correspondingly, as shown in FIG. 1, the limiting apparatus 3 includes the movable limiting block 33. The movable limiting block 33 is located on the fixed rod 31, and can slide on the fixed rod 31. When sliding to be in contact with the slide block 32, the movable limiting block 33 may be locked on the fixed rod 31, to limit sliding of the slide block 32, so that the slide block 32 cannot continue to slide in a direction toward the movable limiting block 33. It can be learned that the movable limiting block 33 can limit the slide range of the slide block 32. Once the slide range of the slide block 32 is limited, the rotation range of the steering column 2 is limited. The steering column 2 synchronously rotates with the steering wheel 1, so that the rotation range of the steering wheel 1 is also limited.

A manner of installing the movable limiting block 33 on the fixed rod 31 may be as follows: The movable limiting block 33 has a tubular structure and is sleeved on the fixed rod 31, and can slide leftward and rightward on the fixed rod 31. To reduce friction between the movable limiting block 33 and the fixed rod 31, the movable limiting block 33 may be a ball nut, and the fixed rod 31 may be a screw having a thread, so that the movable limiting block 33 can spirally slide leftward and rightward on the fixed rod 31. In addition, a ball is in a spiral groove of the movable limiting block 33, to reduce wear between the movable limiting block 33 and the fixed rod 31, and prolong a service life of the limiting apparatus 3.

Because the steering wheel 1 can rotate clockwise and counterclockwise, the limiting apparatus 3 needs to limit clockwise rotation of the steering wheel 1, and also needs to limit counterclockwise rotation of the steering wheel 1. Correspondingly, there are at least two movable limiting blocks 33, and the at least two movable limiting blocks 33 are grouped in pairs. One movable limiting block 33 in the group is configured to limit the clockwise rotation of the steering wheel 1, and the other movable limiting block 33 is configured to limit the counterclockwise rotation of the steering wheel 1. A specific movable limiting block configured to limit the clockwise rotation of the steering wheel 1 and a specific movable limiting block configured to limit the counterclockwise rotation of the steering wheel 1 are related to a correspondence between a slide direction of the slide block 32 and a rotation direction of the steering wheel 1. This is not limited in this application. A skilled person may flexibly limit the movable limiting block based on an actual requirement.

For example, as shown in FIG. 1, there are two movable limiting blocks 33. The two movable limiting blocks 33 are respectively located on two sides of the slide block 32, that is, the slide block 32 is located between the two movable limiting blocks 33. The movable limiting block 33 on a left side of the slide block 32 is configured to limit the slide block 32 to slide leftward, and the movable limiting block 33 on a right side of the slide block 32 is configured to limit the slide block 32 to slide rightward. In this way, the two movable limiting blocks 33 limit the slide block 32 to slide within a specific slide range.

For another example, as shown in FIG. 4, there are four movable limiting blocks 33, and every two movable limiting blocks form one group, so that the limiting apparatus 3 includes two groups of movable limiting blocks. One group of movable limiting blocks 33 may be referred to as first movable limiting blocks 33A, and the other group of movable limiting blocks 33 may be referred to as second movable limiting blocks 33B. As shown in FIG. 4, the two first movable limiting blocks 33A may be respectively located on two sides of the slide block 32, and the two second movable limiting blocks 33B may be respectively located on two sides of the two first movable limiting blocks 33A. To be specific, as shown in FIG. 4, the slide block 32 is located between the two first movable limiting blocks 33A, one first movable limiting block 33A is located between the slide block 32 and one second movable limiting block 33B, and the other first movable limiting block 33A is located between the slide block 32 and the other second movable limiting block 33B. The first movable limiting block 33A performs a first-level limit on the slide block 32, and the second movable limiting block 33B may perform a second-level limit on the slide block 32. This can improve a limit effect on the slide block 32.

This embodiment sets no limitation on a quantity of movable limiting blocks 33 included in the limiting apparatus 3. A skilled person may flexibly select the quantity based on an actual requirement. For ease of description, the two movable limiting blocks 33 shown in FIG. 1 may be used as an example.

In an example, power that drives the slide block 32 to slide on the fixed rod 31 may be from the steering wheel 1, or may be from push of the movable limiting block 33. Power that drives the movable limiting block 33 to slide on the fixed rod 31 may be from a slide driving motor 35. Correspondingly, as shown in FIG. 1, the steer-by-wire system may further include the slide driving motor 35. The movable limiting block 33 slides on the fixed rod 31 through driving of the slide driving motor 35.

The steer-by-wire system may include one slide driving motor 35. The slide driving motor 35 is configured to drive the foregoing plurality of movable limiting blocks 33 to slide on the fixed rod 31. Alternatively, a quantity of slide driving motors 35 may be the same as the quantity of movable limiting blocks 33. Each movable limiting block 33 is driven by using one slide driving motor 35. For example, as shown in FIG. 1 and FIG. 4, the first movable limiting blocks 33A are driven by first slide driving motors 35A, and the second movable limiting blocks 33B are driven by second slide driving motors 35B. This embodiment sets no limitation on the quantity of slide driving motors 35 included in the steer-by-wire system. A skilled person may flexibly select the quantity based on an actual situation.

In an example, when the movable limiting block 33 limits the slide block 32, if the slide driving motor 35 drives the movable limiting block 33 to be in contact with the slide block 32, the slide driving motor 35 still continues to drive the movable limiting block 33 to maintain contact between the movable limiting block 33 and the slide block 32, to apply thrust to the slide block 32, so as to prevent the slide block 32 from continuing to slide.

The steering wheel 1 is limited, so that similar to the steerable wheel, the steering wheel 1 also has a rotation range. In addition, the rotation range of the steering wheel 1 is consistent with the rotation range of the steerable wheel. Therefore, the rotation range of the steering wheel 1 needs to be calculated based on the rotation range of the steerable wheel. After the rotation range of the steering wheel 1 is calculated, a slide range of the movable limiting block 33 may be controlled to limit the slide range of the slide block 32, so that the steering wheel 1 rotates within the calculated rotation range.

To dynamically adjust the rotation range of the steerable wheel in real time to ensure stable driving of the vehicle, the steerable wheel has optimal rotation ranges in different working conditions. The optimal rotation range may be referred to as a target rotation range of the steerable wheel in the working condition. The target rotation range of the steerable wheel in the working condition may be calculated by using a traveling parameter of the vehicle. The traveling parameter may include a speed of the vehicle and a maximum yaw rate of the vehicle in the working condition. The target rotation range of the steerable wheel in the working condition may be obtained through calculation by using the following formula:

$$\delta_f = \frac{\left[1 + \frac{m}{c}\left(\frac{a}{c_{ar}} - \frac{b}{c_{af}}\right) \times u^2\right] \times \omega_m \times c}{u} \qquad \text{Formula 1}$$

In the formula, $\delta_f$ represents a maximum rotation angle of the steerable wheel in the working condition, and is in a unit of rad; m represents a weight of the vehicle, and is an attribute value of the vehicle and is in a unit of kg; C represents an axle distance between a front axle and a rear axle of the vehicle, and is in a unit of m and is an attribute value of the vehicle; a represents a distance between the front axle and a center of mass of the vehicle, and is in a unit of m and is an attribute value of the vehicle; b represents a distance between the rear axle and the center of mass of the vehicle, and is in a unit of m and is an attribute value of the vehicle; $c_{af}$ represents cornering stiffness of the front axle, and is in a unit of N/rad and is an attribute value of the vehicle; $c_{ar}$ represents cornering stiffness of the rear axle, and is in a unit of N/rad and is an attribute value of the vehicle; u represents a speed of the vehicle, and is in a unit of m/s and is a state value of the vehicle; and $\omega_m$ represents a maximum yaw rate that the vehicle can withstand in the working condition, and is in a unit of rad/s and is a state value of the vehicle.

Rotation of the steerable wheel is symmetrical, that is, the steerable wheel can rotate clockwise and can also rotate counterclockwise. The steerable wheel rotates clockwise to a maximum rotation angle and rotates counterclockwise to a maximum rotation angle. Therefore, after the steer-by-wire system determines the maximum rotation angle $\delta_f$ of the steerable wheel in the working condition, an angle range from negative $\delta_f$ to positive $\delta_f$ constitutes a target rotation range of the steerable wheel in the working condition.

The target rotation range of the steerable wheel in the working condition is an optimal rotation range in which the vehicle is safely and stably driven. The steerable wheel further has a limit rotation range. The limit rotation range of the steerable wheel is a maximum range in which the steerable wheel can steer, and is an attribute value of the vehicle. Therefore, the target rotation range of the steerable wheel in the working condition is less than or equal to the limit rotation range of the steerable wheel. Therefore, the target rotation range of the steerable wheel in the working condition is a rotation range that is calculated based on the traveling parameter in the working condition and that is less than or equal to the limit rotation range of the steerable wheel.

The limit rotation range of the steerable wheel is obtained based on a limit rotation angle of the steerable wheel. Therefore, the maximum rotation angle of the steerable wheel in the working condition is a rotation angle that is obtained through calculation based on the traveling parameter in the working condition and that is less than or equal to the limit rotation angle of the steerable wheel.

After the maximum rotation angle of the steerable wheel in the working condition is determined, a maximum rotation angle of the steering wheel 1 in the working condition may be determined by using the following formula:

$$\delta_s = i \times \delta_f + \tau \qquad \text{Formula 2}$$

In the formula, $\delta_s$ represents the maximum rotation angle of the steering wheel in the working condition, and is in a unit of rad; i represents a steering ratio, which has no dimensional unit; and $\tau$ represents a correction amount, namely, an error compensation value, and is in a unit of rad.

Similarly, rotation of the steering wheel is symmetrical. After the steer-by-wire system determines the maximum rotation angle $\delta_s$ of the steering wheel in the working condition, an angle range from negative $\delta_s$ to positive $\delta_s$ constitutes a target rotation range of the steering wheel in the working condition.

The rotation range that is of the steerable wheel and that is obtained based on the limit rotation angle and a rotation direction of the steerable wheel is the limit rotation range of the steerable wheel. In this case, a rotation angle that is of the steering wheel and that is obtained based on the limit rotation angle of the steerable wheel and the steering ratio is referred to as a limit rotation angle of the steering wheel, and a target rotation range that is of the steering wheel and that is obtained based on the limit rotation angle and a rotation direction of the steering wheel is a limit rotation range of the steering wheel.

In this way, when the steerable wheel rotates within the rotation range from negative $\delta_f$ to positive $\delta_f$, the limiting apparatus 3 can control the steering wheel 1 to rotate within the rotation range from negative $\delta_s$ to positive $\delta_s$. It can be learned that the steer-by-wire system may use the limiting apparatus to limit the rotation of the steering wheel, so that the steering wheel no longer rotates without a limitation, but rotates within the target rotation range corresponding to the rotation range of the steerable wheel. In this way, the rotation range of the steering wheel is consistent with the rotation range of the steerable wheel. Therefore, when the steerable wheel rotates to a limit position, the steering wheel also rotates to a limit position. This facilitates operation and control of a driver on vehicle steering, and facilitates driving safety.

In addition, the limiting apparatus 3 in the steer-by-wire system may not only limit the steering wheel to rotate within the limit rotation range, but also dynamically adjust the rotation range of the steering wheel 1 based on a traveling parameter in a working condition. For example, the vehicle has a rotation range in a working condition 1, and has another rotation range in a working condition 2. The rotation range of the steerable wheel can be adjusted based on a condition in which the vehicle is located. However, the rotation range of the steering wheel 1 is calculated based on the rotation range of the steerable wheel. Therefore, the rotation range of the steering wheel 1 can also be dynamically adjusted based on an actual working condition, to improve driving safety.

It can be learned from the foregoing that the steerable wheel has a limit rotation range. Correspondingly, when the target rotation range of the steerable wheel is the limit rotation range, the target rotation range of the steering wheel 1 also reaches a limit rotation range. When the movable limiting block 33 limits the steering wheel, because the movable limiting block 33 can also slide on the fixed rod 31, if the driver operates the steering wheel with excessive strength, the slide block 32 may push the movable limiting block 33 to slide on the fixed rod 31. As a result, the movable limiting block 33 cannot limit sliding of the slide block 32.

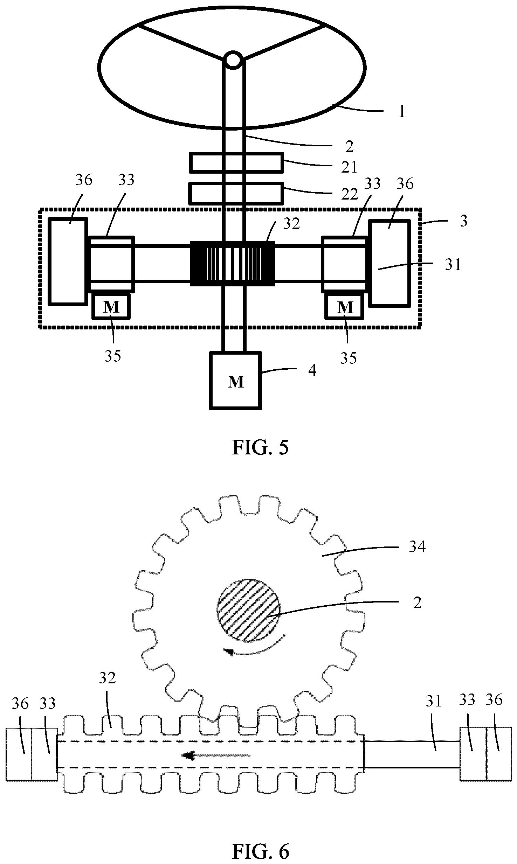

To avoid occurrence of the foregoing situation and enable the steering wheel 1 to have the limit rotation range, correspondingly, as shown in FIG. 5, the steer-by-wire system further includes a fixed limiting block 36. The fixed limiting block 36 is fixed at an end of the fixed rod 31, and is configured to limit the movable limiting block 33 to slide on the fixed rod 31, to limit the steering wheel 1 to rotate within the limit rotation range.

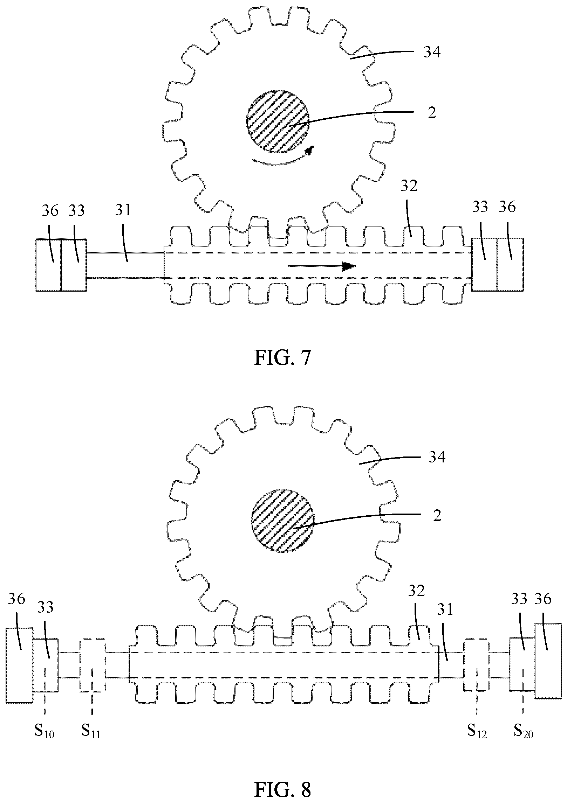

When the target rotation range of the steering wheel 1 is the limit rotation range of the steering wheel 1, as shown in FIG. 6, if the steering wheel 1 rotates clockwise to the maximum rotation angle, the movable limiting block 33 on a left side is in contact with the fixed limiting block 36 on the left side. As shown in FIG. 7, if the steering wheel 1 rotates counterclockwise to the maximum rotation angle, the movable limiting block 33 on a right side is in contact with the fixed limiting block 36 on the right side. As shown in FIG. 6 and FIG. 7, a distance between the two movable limiting blocks 33 is a limit slide range of the slide block 32 on the fixed rod 31.

For example, when the driver operates the steering wheel clockwise with excessive strength, the steering wheel 1 rotates clockwise. As shown in FIG. 6, the gear 34 on the steering column 2 also rotates clockwise accordingly, so that the slide block 32 that engages with the gear 34 slides leftward, and pushes the movable limiting block 33 on the left side to slide leftward. However, when the movable limiting block 33 on the left side is in contact with the fixed limiting block 36 on the left side, because the fixed limiting block 36 is fixed on the fixed rod 31, the slide block 32 cannot continue to slide leftward. Therefore, the steering wheel 1 cannot continue to rotate clockwise, so that the steering wheel 1 reaches the limit rotation angle of the steering wheel 1 in a clockwise rotation direction. In this case, the steerable wheel also reaches the limit rotation angle of the steerable wheel in the clockwise rotation direction.

For another example, when the driver operates the steering wheel counterclockwise with excessive strength, the steering wheel 1 rotates counterclockwise. As shown in FIG. 7, the gear 34 on the steering column 2 also rotates counterclockwise accordingly, so that the slide block 32 that engages with the gear 34 slides rightward, and pushes the movable limiting block 33 on the right side to slide rightward. However, when the movable limiting block 33 on the right side is in contact with the fixed limiting block 36 on the right side, because the fixed limiting block 36 is fixed on the fixed rod 31, the slide block 32 cannot continue to slide rightward. Therefore, the steering wheel 1 cannot continue to rotate counterclockwise, so that the steering wheel 1 reaches the limit rotation angle of the steering wheel 1 in a counterclockwise rotation direction. In this case, the steerable wheel also reaches the limit rotation angle of the steerable wheel in the counterclockwise rotation direction.

It can be learned that the fixed limiting block 36 may limit the limit rotation range of the steering wheel 1, so that when the steerable wheel reaches the limit rotation angle of the steerable wheel, the steering wheel 1 also reaches the limit rotation angle of the steering wheel 1. Therefore, rotation of the steering wheel 1 is consistent with rotation of the steerable wheel, to avoid a case in which the steerable wheel reaches the limit rotation angle but the steering wheel can continue to rotate.

In an application, after calculating the target rotation range of the steering wheel in the working condition, a wire control steering may obtain, based on a pre-stored correspondence between the rotation range of the steering wheel and the slide range of the movable limiting block 33, a target slide range that is of the movable limiting block 33 and that corresponds to the target rotation range of the steering wheel. After obtaining the target slide range of the movable limiting block, the wire control steering may control the movable limiting block to slide from a default position to another boundary position of the target slide range.

As shown in FIG. 8, a default position of the movable limiting block 33 on the left side is a position at which the movable limiting block 33 on the left side is in contact with the fixed limiting block, and is denoted as $S_{10}$. A default position of the movable limiting block 33 on the right side is a position at which the movable limiting block 33 on the right side is in contact with the fixed limiting block 36, and is denoted as $S_{20}$. The wire control steering may control the movable limiting block 33 on the left side to slide from the default position $S_{10}$ to a first target position $S_{11}$. The first target position $S_{11}$ is a boundary position of a target slide range of the movable limiting block on the left side. The wire control steering may further control the movable limiting block 33 on the right side to slide from the default position $S_{20}$ to a second target position $S_{12}$. The second target position $S_{12}$ is a boundary position of a target slide range of the movable limiting block on the right side. A distance between $S_{10}$ and $S_{11}$ is the target slide range of the movable limiting block 33 on the left side, and a distance between $S_{20}$ and $S_{12}$ is the target slide range of the movable limiting block 33 on the right side. $S_{11}$ and $S_{12}$ may be dynamically changed based on a working condition of the vehicle, that is, once the target rotation range of the steering wheel 1 changes, $S_{11}$ and $S_{12}$ also changes accordingly.

In this way, the slide block 32 is limited to slide between $S_{11}$ and $S_{12}$, and the steering wheel 1 is limited to rotate within the target rotation range, that is, the steering wheel can rotate counterclockwise to a left boundary position of the target rotation range, and can rotate clockwise to a right boundary position of the target rotation range.

However, when the driver operates the steering wheel excessive strength, the steering wheel rotates clockwise beyond a target rotation range in a current working condition. In this case, as shown in FIG. 6, the fixed limiting block 36 on the left side prevents the steering wheel from continuing to rotate. When the steering wheel rotates counterclockwise beyond the target rotation range in the current working condition, as shown in FIG. 6, the fixed limiting block 36 on the right side prevents the steering wheel from continuing to rotate.

The limiting apparatus 3 of the steer-by-wire system may not only limit steering of the steering wheel 1, but also adjust steering of the steering wheel 1, to correct inconsistency between steering of the steerable wheel and steering of the steering wheel 1.

Generally, after obtaining a rotation angle of the steering wheel 1 by using the rotation angle sensor 22, the steering controller of the steer-by-wire system may obtain a rotation angle of the steerable wheel based on a pre-stored target correspondence between the rotation angle of the steering wheel and the rotation angle of the steerable wheel. Then, the steering controller may control a steering driving apparatus to drive the steerable wheel to steer based on the obtained rotation angle, so that steering of the steerable wheel is consistent with steering of the steering wheel.

However, steering of the steerable wheel may be inconsistent with steering of the steering wheel. For example, steering of the steerable wheel fails to follow steering of the steering wheel, or steering of the steerable wheel exceeds steering of the steering wheel. In this case, steering of the steerable wheel or steering of the steering wheel needs to be corrected. If steering of the steerable wheel is corrected, tire wear may occur, and tire damage is serious. Therefore, steering of the steering wheel may be corrected. Correspondingly, the movable limiting block 33 is further configured to: when the rotation angle of the steering wheel 1 is inconsistent with the rotation angle of the steerable wheel, push the slide block 32 to slide on the fixed rod 31, so that the slide block 32 drives the steering column 2 to rotate, to correct a rotation angle deviation between the steering wheel 1 and the steerable wheel.

The consistency between the rotation angle of the steering wheel 1 and the rotation angle of the steerable wheel means that a correspondence between the rotation angle of the steering wheel 1 and the rotation angle of the steerable wheel meets the pre-stored target correspondence between the rotation angle of the steering wheel and the rotation angle of the steerable wheel. The inconsistency means that the correspondence between the rotation angle of the steering wheel 1 and the rotation angle of the steerable wheel does not meet the target correspondence.

In an example, the steering controller of the steer-by-wire system obtains a current rotation angle of the steering wheel by using the rotation angle sensor 22, obtains a current rotation angle of the steerable wheel by using a rotation angle sensor installed on the steerable wheel, and detects whether a correspondence between the current rotation angle of the steering wheel and the current rotation angle of the steerable wheel is consistent with the pre-stored target correspondence. If the correspondence between the current rotation angle of the steering wheel and the current rotation angle of the steerable wheel is inconsistent with the pre-stored target correspondence between the rotation angle of the steering wheel and the rotation angle of the steerable wheel, the rotation angle of the steering wheel is inconsistent with the rotation angle of the steerable wheel. The steering controller may calculate a rotation angle deviation between the current rotation angle of the steering wheel and the current rotation angle of the steerable wheel; and then control, based on the rotation angle deviation, a corresponding movable limiting block 33 to push the slide block 32 to slide on the fixed rod 31 in a direction used to eliminate the rotation angle deviation. Because there is a rotation connection between the slide block 32 and the steering column 2, the steering column 2 can rotate, to eliminate the rotation angle deviation between the steering wheel and the steerable wheel.

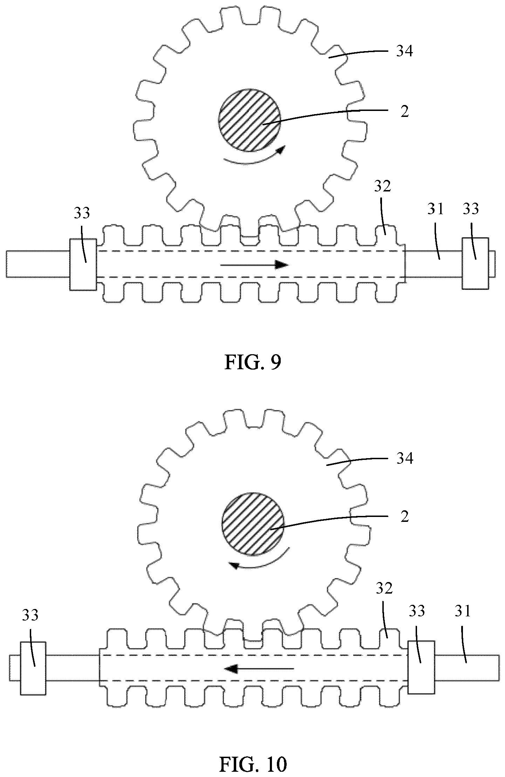

For example, if the steering wheel 1 rotates clockwise relative to the steerable wheel, the steering wheel needs to rotate counterclockwise to eliminate the rotation angle deviation. As shown in FIG. 9, with reference to FIG. 3, the movable limiting block 33 on the left side of the slide block 32 may be controlled to slide rightward to be in contact with the slide block 32 and push the slide block 32 to slide rightward. As shown in FIG. 9, when the slide block 32 slides rightward, the gear 34 may rotate counterclockwise, so that the steering wheel rotates counterclockwise, to eliminate the rotation angle deviation between the steering wheel 1 and the steerable wheel. A straight arrow in FIG. 9 indicates a slide direction of the slide block 32, and a rotation arrow in FIG. 9 indicates a rotation direction of the gear 34.

For another example, if the steering wheel 1 rotates counterclockwise relative to the steerable wheel, the steering wheel needs to rotate clockwise to correct the rotation angle deviation. As shown in FIG. 10, with reference to FIG. 3, the movable limiting block 33 on the right side of the slide block 32 may be controlled to slide leftward to be in contact with the slide block 32 and push the slide block 32 to slide leftward. As shown in FIG. 10, when the slide block 32 slides leftward, the gear 34 may rotate clockwise, so that the steering wheel rotates clockwise, to eliminate the rotation angle deviation between the steering wheel 1 and the steerable wheel. A straight arrow in FIG. 10 indicates a slide direction of the slide block 32, and a rotation arrow in FIG. 10 indicates a rotation direction of the gear 34.

The consistency between the rotation angle of the steering wheel and the rotation angle of the steerable wheel means that the correspondence between the rotation angle of the steering wheel and the rotation angle of the steerable wheel is consistent with the pre-stored target correspondence between the rotation angle of the steering wheel and the rotation angle of the steerable wheel. The target correspondence may also be referred to as the steering ratio of the vehicle.

It can be learned that the rotation angle of the steering wheel 1 may be adjusted to be consistent with that of the steerable wheel, to alleviate tire wear generated by adjustment of the steerable wheel, and protect a tire. Dynamic adjustment of the rotation angle of the steering wheel and the rotation angle of the steerable wheel can improve precision of alignment between the steering wheel and the steerable wheel.

The limiting apparatus 3 of the steer-by-wire system may not only limit steering of the steering wheel 1 and adjust steering of the steering wheel 1 to correct inconsistency between steering of the steerable wheel and steering of the steering wheel 1, but also drive the steering wheel 1 to automatically return.

Correspondingly, the steering controller of the steer-by-wire system may control the movable limiting block 33 to push the slide block 32 to slide on the fixed rod 31, so that the slide block 32 drives the steering column 2 to rotate, and the steering wheel 1 returns. In a process in which the steering wheel 1 returns, a slide speed of the movable limiting block 33 may be controlled to control an automatic return speed of the steering wheel 1.

For example, when the driver operates the steering wheel 1 to rotate clockwise to a specific position and then takes hands off the steering wheel 1, the steering wheel 1 needs to rotate counterclockwise to return. To enable the steering wheel 1 to rotate counterclockwise to return, as shown in FIG. 9, the movable limiting block 33 on the left side of the slide block 32 slides rightward to be in contact with the slide block 32, to push the slide block 32 to slide rightward at a specified speed. When the slide block 32 slides rightward at the specified speed, the gear 34 may rotate counterclockwise. In a process in which the gear 34 rotates counterclockwise, both the steering column 2 and the steering wheel 1 rotate counterclockwise, so that the steering wheel 1 rotates counterclockwise. When detecting that the steering wheel 1 is at a return position, the steering controller controls the movable limiting block 33 to stop pushing the slide block 32 to slide rightward, so that the gear 34 stops rotating, and the steering wheel 1 also stays at the return position.

For another example, when the driver operates the steering wheel 1 to rotate counterclockwise to a specific position and then takes hands off the steering wheel 1, the steering wheel 1 needs to rotate clockwise to return. To enable the steering wheel 1 to rotate clockwise to return, as shown in FIG. 10, the movable limiting block 33 on the right side of the slide block 32 slides leftward to be in contact with the slide block 32, to push the slide block 32 to slide leftward at a specified speed. When the slide block 32 slides leftward at the specified speed, the gear 34 may rotate clockwise. In a process in which the gear 34 rotates clockwise, both the steering column 2 and the steering wheel 1 rotate clockwise, so that the steering wheel 1 rotates clockwise. When detecting that the steering wheel 1 is at a return position, the steering controller controls the movable limiting block 33 to stop pushing the slide block 32 to slide leftward, so that the gear 34 stops rotating, and the steering wheel 1 also stays at the return position.

In addition, as shown in FIG. 1 and FIG. 2, the steer-by-wire system may further include a return driving motor 4, where the return driving motor 4 is configured to drive the steering column 2 to drive the steering wheel 1 to automatically return.

In an example, when the wire control steering detects that the steering wheel intends to return and the return driving motor 4 fails and cannot drive the steering column 2 to drive the steering wheel 1 to automatically return, a corresponding movable limiting block 33 may be controlled based on the foregoing method to push the slide block 32 to slide in a direction that enables the steering wheel 1 to automatically return, so that the steering wheel 1 automatically returns during sliding of the slide block 32.

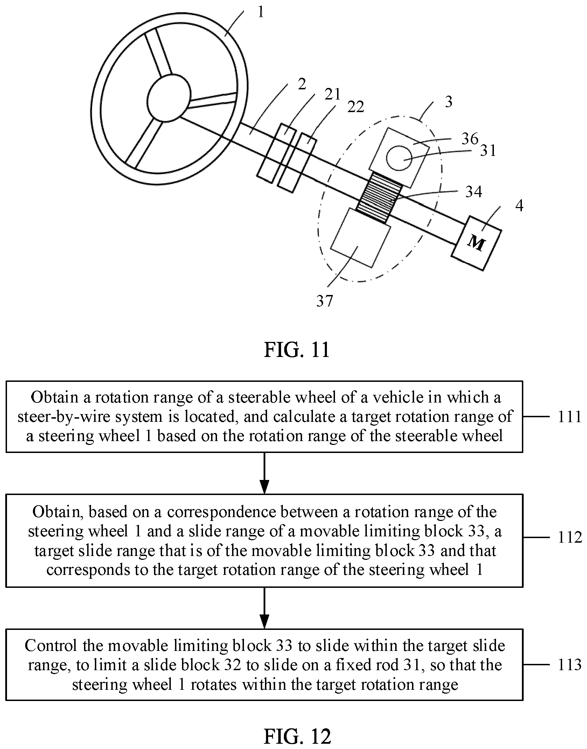

In an example, to provide the driver with a hand feeling for operating the steering wheel 1, correspondingly, as shown in FIG. 11, the limiting apparatus 3 may further include a damper 37. As shown in FIG. 11, the damper 37 may be installed on the gear 34, and a position of the damper 37 is opposite to a position of the fixed rod 31. When the driver operates the steering wheel, the damper 37 provides resistance to rotation of the gear 34. This brings the driver with a hand feeling for operation.

In an example, the vehicle in which the steer-by-wire system is located further includes a stability control system. During working of the steer-by-wire system, even if the vehicle has an excessively high speed, emergency braking, a relatively large yaw rate, or the like, the stability control system can start to stabilize the vehicle and prevent an accident such as overturning of the vehicle.

Based on the foregoing description, the steer-by-wire system may use the limiting apparatus 3 to limit rotation of the steering wheel 1, so that the steering wheel 1 no longer rotates without a limitation, but rotates within the target rotation range corresponding to the rotation range of the steerable wheel. Therefore, when the steerable wheel rotates to a limit position, the steering wheel 1 also rotates to a limit position.

When the movable limiting block 33 cannot limit the steering wheel 1 to rotate within the limit rotation range, the fixed limiting block 36 may further limit the steering wheel 1 to rotate within the limit rotation range, so that when the steerable wheel rotates within the limit rotation range of the steerable wheel, the steering wheel 1 also rotates within the limit rotation range the steering wheel 1. Therefore, a rotation range of the steering wheel 1 is consistent with a rotation range of the steerable wheel. This facilitates driving safety of the vehicle.

In a process in which the steering wheel 1 and the steerable wheel rotate, when there is misalignment between steering of the steering wheel 1 and steering of the steerable wheel, that is, the pre-stored correspondence is not met, the movable limiting block 33 may further push the slide block 32 to slide, so that the steering wheel 1 rotates to eliminate the rotation angle deviation between the steering wheel 1 and the steerable wheel, and improve precision of alignment between steering of the steering wheel 1 and steering of the steerable wheel.

When the return driving motor 4 of the steer-by-wire system fails, or when the steer-by-wire system does not have the return driving motor, the movable limiting block 33 may further push the slide block 32 to slide, to enable the steering wheel 1 to rotate, so that the steering wheel 1 automatically returns.

In a process in which rotation of the steering wheel 1 is limited, as shown in FIG. 6, if clockwise rotation of the steering wheel is limited, the movable limiting block 33 on the left side and the fixed limiting block 36 on the left side are used to limit leftward sliding of the slide block 32. As shown in FIG. 7, if counterclockwise rotation of the steering wheel is limited, the movable limiting block 33 on the right side and the fixed limiting block 36 on the right side are used to limit rightward sliding of the slide block 32.

In a process in which a deviation between steering of the steering wheel 1 and steering of the steerable wheel is corrected, as shown in FIG. 9, if the steering wheel 1 is enabled to rotate counterclockwise, the movable limiting block 33 on the left side pushes the slide block 32 to slide rightward, so that the steering wheel 1 rotates counterclockwise to eliminate the deviation between the steering wheel 1 and the steerable wheel. As shown in FIG. 10, if the steering wheel 1 is enabled to rotate clockwise, the movable limiting block 33 on the right side pushes the slide block 32 to slide leftward, so that the steering wheel 1 rotates clockwise to eliminate the deviation between the steering wheel 1 and the steerable wheel.

In a process in which the movable limiting block 33 pushes the slide block 32 to enable the steering wheel 1 to automatically return, if the steering wheel 1 is enabled to rotate counterclockwise to a return position, as shown in FIG. 9, the movable limiting block 33 on the left side pushes the slide block 32 to slide rightward at a specified speed, so that the steering wheel 1 rotates counterclockwise. When the steering wheel 1 rotates counterclockwise to the return position, the movable limiting block 33 on the left side stops pushing the slide block 32 to slide rightward. If the steering wheel 1 is enabled to rotate clockwise to the return position, as shown in FIG. 10, the movable limiting block 33 on the right side pushes the slide block 32 to slide leftward at a specified speed, so that the steering wheel 1 rotates clockwise. When the steering wheel 1 rotates clockwise to the return position, the movable limiting block 33 on the right side stops pushing the slide block 32 to slide leftward.

In this embodiment of this application, the steer-by-wire system may use the limiting apparatus to limit rotation of the steering wheel, so that the steering wheel no longer rotates without a limitation, but rotates within the target rotation range corresponding to the rotation range of the steerable wheel. Therefore, when the steerable wheel rotates to a limit position, the steering wheel also rotates to a limit position, so that the rotation of the steering wheel is consistent with rotation of the steerable wheel. This facilitates operation and control of a driver on vehicle steering, and facilitates driving safety.

An embodiment of this application further provides a vehicle, where the vehicle may be an intelligent car, a new energy car, a self-driving car, or the like. The vehicle may include the foregoing steer-by-wire system. For example, the steer-by-wire system may use the limiting apparatus to limit rotation of the steering wheel, so that the steering wheel no longer rotates without a limitation, but rotates within a target rotation range corresponding to a rotation range of the steerable wheel. In this way, a rotation range of the steering wheel is consistent with a rotation range of the steerable wheel. Therefore, when the steerable wheel rotates to a limit position, the steering wheel also rotates to a limit position.

This facilitates operation and control of a driver on vehicle steering, and facilitates driving safety.

An embodiment of this application further provides a steering control method. The method may be performed by the foregoing steer-by-wire system, may be specifically performed by the steering controller in the steer-by-wire system, and may be performed based on a procedure shown in FIG. 12.

In step 111, a rotation range of a steerable wheel of a vehicle in which the steer-by-wire system is located is obtained, and a target rotation range of the steering wheel 1 is calculated based on the rotation range of the steerable wheel.

In an example, the steering controller may first obtain a traveling parameter of the vehicle, for example, a speed of the vehicle and a maximum yaw rate of the vehicle in a working condition. Then the traveling parameter is brought into the foregoing formula 1, to calculate a maximum rotation angle $\delta_f$ of the steerable wheel in the working condition. Further, a rotation range of the steerable wheel in the working condition is obtained based on the maximum rotation angle $\delta_f$ of the steerable wheel in the working condition. Afterwards, a maximum rotation angle of the steering wheel 1 in the working condition is calculated based on a stored steering ratio and the maximum rotation angle $\delta_f$ of the steerable wheel in the working condition, that is, the maximum rotation angle $\delta_s$ of the steering wheel in the working condition is calculated according to the foregoing formula 2. Then a target rotation range of the steering wheel in the working condition may be calculated based on the maximum rotation angle $\delta_s$ of the steering wheel in the working condition.

Because the steerable wheel has a limit rotation range, correspondingly, a rotation range that is obtained through calculation based on the traveling parameter and that is less than or equal to the limit rotation range of the steerable wheel may be used as the rotation range of the steerable wheel. For example, a maximum rotation angle that is obtained through calculation based on the traveling parameter and that is less than or equal to a limit rotation angle of the steerable wheel may be used as the maximum rotation angle of the steerable wheel in the working condition, and then the rotation range of the steerable wheel in the working condition is calculated based on the maximum rotation angle of the steerable wheel in the working condition.

In step 112, a target slide range that is of the movable limiting block 33 and that corresponds to the target rotation range of the steering wheel 1 is obtained based on a correspondence between a rotation range of the steering wheel 1 and a slide range of the movable limiting block 33.

In an example, the correspondence between a rotation range of the steering wheel 1 and a slide range of the movable limiting block 33 is pre-stored in the steer-by-wire system. After calculating the target rotation range of the steering wheel 1, the steering controller may find the target slide range that is of the movable limiting block 33 and that corresponds to the target rotation range of the steering wheel 1.

In step 113, the movable limiting block 33 is controlled to slide within the target slide range, to limit the slide block 32 to slide on the fixed rod 31, so that the steering wheel 1 rotates within the target rotation range.

In an example, after finding the target slide range of the movable limiting block 33, the steering controller may control the slide driving motor 35 of the movable limiting block 33 to drive the movable limiting block 33 to move to a target position. A distance between a default position and the target position of the movable limiting block 33 is the target slide range of the movable limiting block 33, and the default position of the movable limiting block 33 is a position at which the movable limiting block 33 is in contact with the fixed limiting block 36. Two movable limiting blocks 33 slide within the target slide range, which limits the slide block 32 to slide within a specific range, thereby limiting the steering wheel 1 to rotate within the target rotation range.

For example, as shown in FIG. 8, the steering controller controls the movable limiting block 33 on a left side to move rightward from a default position Sio to a first target position $S_{11}$, and controls the movable limiting block 33 on a right side to move leftward from a default position $S_{20}$ to a second target position $S_{12}$. A range between the default position Sio of the movable limiting block on the left side and the first target position $S_{11}$ is a target slide range of the movable limiting block 33 on the left side, and a range between the default position $S_{20}$ of the movable limiting block on the right side and the second target position $S_{12}$ is a target slide range of the movable limiting block 33 on the right side. A slide range between the first target position $S_{11}$ and the second target position $S_{12}$ is a slide range of the slide block 32. In this way, when the slide block 32 slides within the range between the first target position $S_{11}$ at which the movable limiting block 33 on the left side stays and the second target position $S_{12}$ at which the movable limiting block 33 on the right side stays, the steering wheel 1 rotates within the target rotation range. The movable limiting block on the left side is located in the first target position $S_{11}$ to limit clockwise rotation of the steering wheel. The movable limiting block on the right side is located in the second target position $S_{12}$ to limit counterclockwise rotation of the steering wheel.

It can be learned that the steer-by-wire system may use the limiting apparatus to limit rotation of the steering wheel, so that the steering wheel no longer rotates without a limitation, but rotates within the target rotation range corresponding to the rotation range of the steerable wheel. Therefore, when the steerable wheel rotates to a limit position, the steering wheel also rotates to a limit position, so that the rotation of the steering wheel is consistent with rotation of the steerable wheel. This facilitates operation and control of a driver on vehicle steering, and facilitates driving safety.

The method may be further used to adjust a rotation angle of the steering wheel, so that the rotation angle of the steering wheel is always consistent with a rotation angle of the steerable wheel. Correspondingly, first, the steering controller may obtain a current rotation angle of the steering wheel 1, a current rotation angle of the steerable wheel, and a stored target correspondence between the rotation angle of the steering wheel 1 and the rotation angle of the steerable wheel. Then, when detecting that a correspondence between the current rotation angle of the steering wheel 1 and the current rotation angle of the steerable wheel does not meet the target correspondence, the steering controller determines that steering of the steering wheel 1 is inconsistent with steering of the steerable wheel. Subsequently, the steering controller controls, based on a rotation angle deviation between the current rotation angle of the steering wheel 1 and the current rotation angle of the steerable wheel, the movable limiting block 33 to push the slide block 32 to slide on the fixed rod 31. Finally, when detecting that the correspondence between the current rotation angle of the steering wheel 1 and the current rotation angle of the steerable wheel meets the target correspondence, the steering controller controls the movable limiting block 33 to stop pushing the slide block 32 to slide on the fixed rod 31.

It can be learned that in a process in which the steering wheel 1 and the steerable wheel rotate, when there is misalignment between steering of the steering wheel 1 and steering of the steerable wheel, that is, the pre-stored correspondence is not met, the movable limiting block 33 may further push the slide block 32 to slide, so that the steering wheel 1 rotates to eliminate a deviation between steering of the steering wheel 1 and steering of the steerable wheel, and improve precision of alignment between steering of the steering wheel 1 and steering of the steerable wheel.

The method may be further used to control automatic return of the steering wheel. Correspondingly, the steering controller may control the movable limiting block 33 to push the slide block 32 to slide on the fixed rod 31. When detecting that the steering wheel 1 returns, the steering controller controls the movable limiting block 33 to stop pushing the slide block 32 to slide on the fixed rod 31.

For example, normally, the return driving motor 4 of the steer-by-wire system drives the steering column 2 to rotate, so that the steering wheel automatically returns. However, when the return driving motor 4 fails, the steering controller may control the movable limiting block 33 to push the slide block 32 to slide on the fixed rod 31 at a specified speed. When detecting that the steering wheel 1 returns, the steering controller controls the movable limiting block 33 to stop pushing the slide block 32 to slide on the fixed rod 31.

It can be learned that, even if the return driving motor 4 that drives the steering wheel 1 to automatically return fails due to a fault, the limiting apparatus 3 can drive the steering wheel 1 to automatically return, thereby ensuring an automatic return function of the steering wheel 1.

It can be learned from the foregoing that the limiting apparatus may not only limit rotation of the steering wheel, but also adjust the rotation angle of the steering wheel, so that steering of the steering wheel is always consistent with steering of the steerable wheel, to improve precision of alignment between the steering wheel and the steerable wheel, and drive the steering wheel to automatically return.

Based on the foregoing description, at least the following several scenarios may be included when the steer-by-wire system controls the vehicle to steer. A scenario is a process in which the limiting apparatus is used to align the rotation angle of the steering wheel and the rotation angle of the steerable wheel. A scenario is a scenario in which the limiting apparatus limits the rotation of the steering wheel. Another scenario is a scenario in which the driving motor fails, for example, a process in which the slide driving motor fails or the return driving motor fails. The foregoing several scenarios are described below in detail.

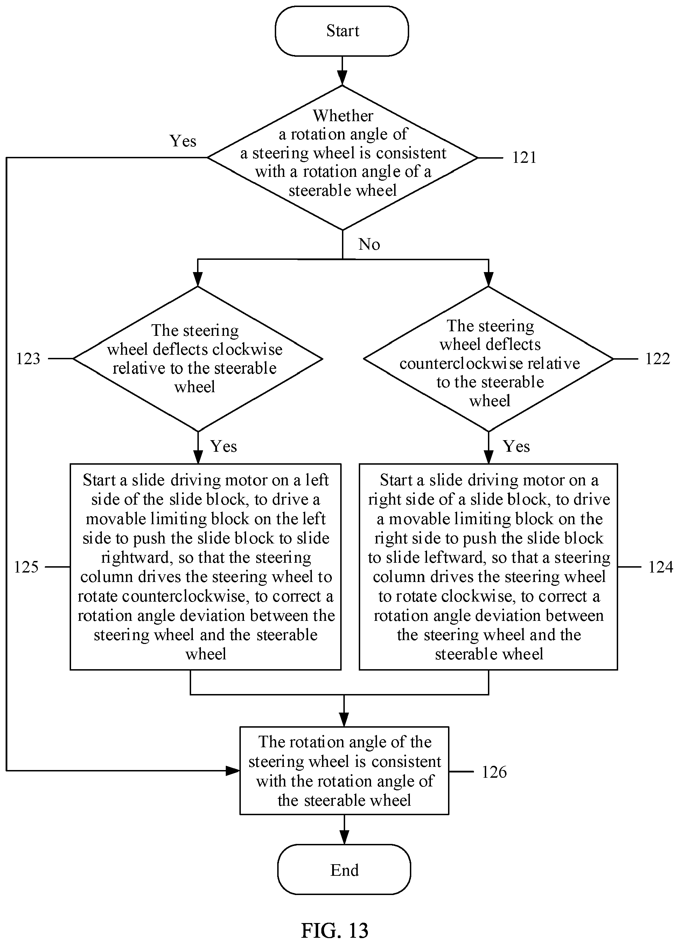

In the process of aligning the rotation angle of the steering wheel and the rotation angle of the steerable wheel, after the vehicle is powered on, the steer-by-wire system may periodically perform the alignment process, which may be performed based on a procedure shown in FIG. 13.

In step 121, a current rotation angle of the steering wheel and a current rotation angle of the steerable wheel are respectively obtained by using a rotation angle sensor of the steering wheel and a rotation angle sensor of the steerable wheel, and whether the rotation angle of the steering wheel is consistent with the rotation angle of the steerable wheel is further determined based on a pre-stored correspondence between the rotation angle of the steering wheel and the rotation angle of the steerable wheel. If the rotation angle of the steering wheel is consistent with the rotation angle of the steerable wheel, step 126 is proceeded and the alignment ends. If the rotation angle of the steering wheel is inconsistent with the rotation angle of the steerable wheel, step 122 is proceeded to determine whether the steering wheel deflects counterclockwise relative to the steerable wheel. If the steering wheel deflects counterclockwise relative to the steerable wheel, step 124 is proceeded. If the steering wheel does not deflect counterclockwise relative to the steerable wheel, step 123 is proceeded, and then step 125 is proceeded. After step 124 and step 125 are performed, step 126 is proceeded, and then the alignment ends.

In step 124, the slide driving motor on the right side of the slide block is started to drive the movable limiting block on the right side to push the slide block to slide leftward, so that the steering column drives the steering wheel to rotate clockwise, to correct a deviation between the steering wheel and the steerable wheel. In step 125, the slide driving motor on the left side of the slide block is started to drive the movable limiting block on the left side to push the slide block to slide rightward, so that the steering column drives the steering wheel to rotate counterclockwise, to correct a deviation between the steering wheel and the steerable wheel.

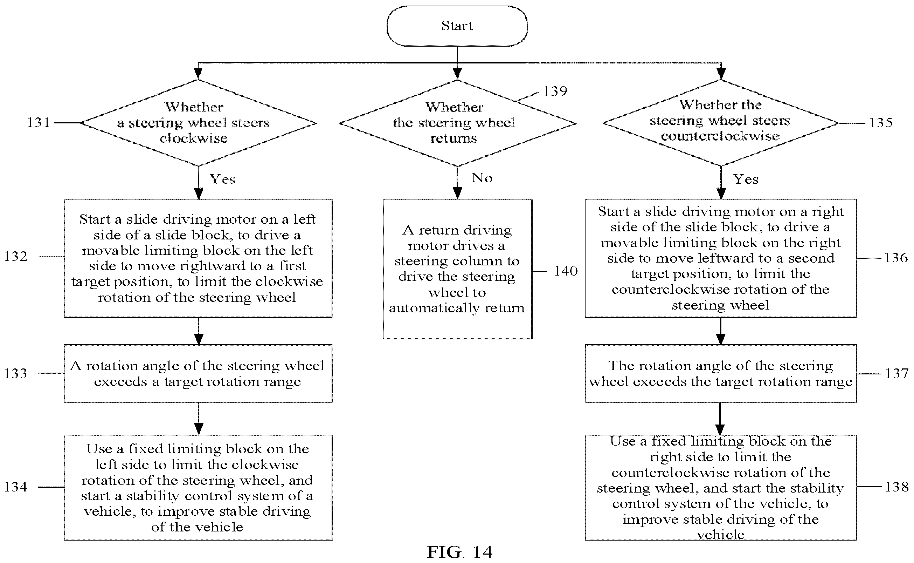

In the scenario of limiting the rotation of the steering wheel, after the vehicle is powered on, the steer-by-wire system may calculate a target rotation range of the steering wheel in a working condition based on the current working condition, and after determining the target rotation range, control, based on a procedure shown in FIG. 14, the steering wheel to rotate within the target rotation range.

In step 131, it is determined whether the steering wheel steers clockwise. If the steering wheel steers clockwise, step 132 is proceeded; or if the steering wheel does not steer clockwise, step 135 is proceeded, or step 139 is proceeded. In step 132, the slide driving motor on the left side of the slide block is started to drive the movable limiting block on the left side to move rightward to a first target position, to limit clockwise rotation of the steering wheel. Then, step 133 is proceeded. A driver operates the steering wheel with excessive strength, so that the rotation of the steering wheel exceeds the target rotation range. In this case, step 134 is proceeded. The fixed limiting block on the left side is used to limit the clockwise rotation of the steering wheel, and a stability control system of the vehicle is started to ensure stable driving of the vehicle.

Similarly, after it is determined that the steering wheel rotates counterclockwise, step 136 may be proceeded. The slide driving motor on the right side of the slide block is started to drive the movable limiting block on the right side to move leftward to a second target position, to limit counterclockwise rotation of the steering wheel. Then, step 137 is proceeded. A driver operates the steering wheel with excessive strength, so that the rotation of the steering wheel exceeds the target rotation range. In this case, step 138 is proceeded. The fixed limiting block on the right side is used to limit the counterclockwise rotation of the steering wheel, and the stability control system of the vehicle is started to ensure stable driving of the vehicle.

In the scenario in which the rotation of the steering wheel is limited, if it is detected that the steering wheel automatically returns, step 139 may be proceeded to step 140. The return driving motor is controlled to drive the steering column to drive the steering wheel to automatically return.

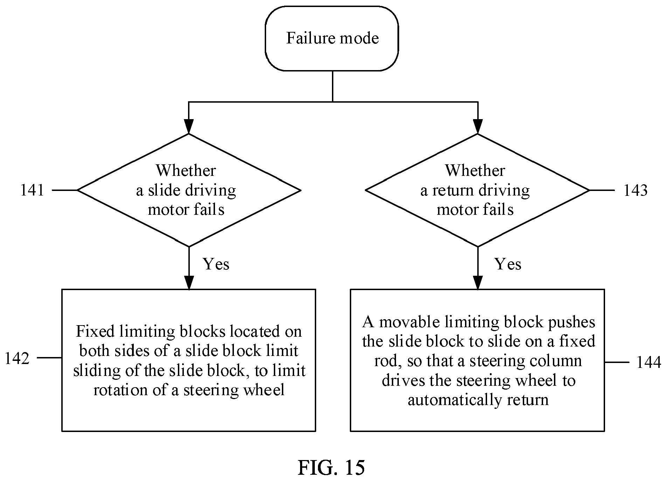

In the scenario in which the driving motor fails, after the vehicle is powered on, the steer-by-wire system may detect, in real time, whether the slide driving motor and the return driving motor fail. As shown in FIG. 15, whether the slide driving motor fails is determined in step 141. If the slide driving motor fails, step 142 is proceeded. The fixed limiting blocks located on both sides of the slide block are used to limit sliding of the slide block, to limit rotation of the steering wheel. Whether the return driving motor fails is determined in step 143. If the return driving motor fails, step 144 is proceeded. A corresponding movable limiting block is determined, based on a rotation direction required for return of the steering wheel, to push the slide block to slide on the fixed rod, so that the steering column drives the steering wheel to automatically return.

In this embodiment of this application, the steer-by-wire system may use the limiting apparatus to limit the rotation of the steering wheel, so that the steering wheel no longer rotates without a limitation, but rotates within the target rotation range corresponding to the rotation range of the steerable wheel. In this way, the rotation range of the steering wheel is consistent with the rotation range of the steerable wheel. Therefore, when the steerable wheel rotates to a limit position, the steering wheel also rotates to a limit position. This facilitates operation and control of a driver on vehicle steering, and facilitates driving safety.

An embodiment of this application further provides a controller. The controller may be a controller of a vehicle, for example, may be a steering controller of the vehicle, and may be configured to perform the foregoing steering control method. The method may be used to enable a limiting apparatus to limit rotation of a steering wheel, so that the steering wheel no longer rotates without a limitation, but rotates within a target rotation range corresponding to a rotation range of a steerable wheel. In this way, the rotation range of the steering wheel is consistent with the rotation range of the steerable wheel. Therefore, when the steerable wheel rotates to a limit position, the steering wheel also rotates to a limit position. This facilitates operation and control of a driver on vehicle steering, and facilitates driving safety.

The foregoing description is merely an embodiment of this application, but is not intended to limit this application.

**Claims**

1. A steer-by-wire system, wherein the steer-by-wire system comprises a steering column (2) and a limiting apparatus (3), and the limiting apparatus (3) comprises a fixed rod (31), a slide block (32), and a movable limiting block (33); **characterised in that**

   the slide block (32) is located on the fixed rod (31), and the slide block (32) can slide on the fixed rod (31) as the steering column (2) rotates; and
   the movable limiting block (33) is located on the fixed rod (31), and can slide on the fixed rod (31), to limit the slide block (32) to slide on the fixed rod (31), so that the steering column (2) rotates within a target rotation range.

2. The steer-by-wire system according to claim 1, wherein the limiting apparatus (3) further comprises a gear (34), the gear (34) is sleeved on the steering column (2) and synchronously rotates with the steering column (2), the slide block (32) has a rack that engages with the gear (34), the slide block (32) engages with the gear (34), and when the gear (34) rotates with the steering column (2), the gear (34) pushes the slide block (32) to slide on the fixed rod (31).

3. The steer-by-wire system according to claim 1 or 2, wherein the fixed rod (31) is a screw, both the slide block (32) and the movable limiting block (33) are ball nuts, both the slide block (32) and the movable limiting block (33) are sleeved on the fixed rod (31), and the slide block (32) and the movable limiting block (33) can spirally slide on the fixed rod (31).

4. The steer-by-wire system according to any one of claims 1 to 3, wherein the steer-by-wire system further comprises a sliding drive motor (35), and the movable limiting block (33) slides on the fixed rod (31) through driving of the sliding drive motor (35).

5. The steer-by-wire system according to any one of claims 1 to 4, wherein the movable limiting block (33) is further configured to: when a rotation angle of the steering column (2) is inconsistent with a rotation angle of a steerable wheel of a vehicle in which the steer-by-wire system is located, push the slide block (32) to slide on the fixed rod (31), so that the slide block (32) pushes the steering column (2) to rotate, to correct a rotation angle deviation between the steering column (2) and the steerable wheel.

6. The steer-by-wire system according to any one of claims 1 to 5, wherein the movable limiting block (33) is further configured to: when it is detected that a steering wheel (1) of the vehicle in which the steer-by-wire system is located intends to return and a return driving motor (4) of the steer-by-wire system fails, push the slide block (32) to slide on the fixed rod (31), so that the slide block (32) pushes the steering column (2) to rotate, and the steering wheel (1) returns.

7. The steer-by-wire system according to any one of claims 1 to 6, wherein the target rotation range is specifically obtained through calculation based on a rotation range of the steerable wheel of the vehicle in which the steer-by-wire system is located and a stored steering ratio, and the steering ratio is a ratio of a rotation angle of the steering wheel (1) of the vehicle to a rotation angle of the steerable wheel; and
the rotation range of the steerable wheel is a rotation range that is obtained through calculation based on a traveling parameter of the vehicle in a working condition and that is less than or equal to a limit rotation range of the steerable wheel, the traveling parameter comprises a vehicle speed of the vehicle and a maximum yaw rate of the vehicle in the working condition, and the limit rotation range of the steerable wheel is an attribute value of the vehicle.

8. The steer-by-wire system according to any one of claims 1 to 7, wherein the steer-by-wire system further comprises a fixed limiting block (36); the fixed limiting block (36) is fixed at an end of the fixed rod (31), and is configured to limit the movable limiting block (33) to slide on the fixed rod (31), to limit the steering column (2) to rotate within a limit rotation range; and the limit rotation range of the steering column (2) is a maximum target rotation range of the steering column (2), and is obtained through calculation based on the limit rotation range of the steerable wheel of the vehicle in which the steer-by-wire system is located.

9. A steering control method, wherein the method is applied to the steer-by-wire system according to any one of claims 1 to 8, and the method comprises:

obtaining a target rotation range of a steering column (2);
obtaining, based on a correspondence between a rotation range of the steering column (2) and a slide range of a movable limiting block (33), a target slide range that is of the movable limiting block (33) and that corresponds to the target rotation range of the steering column (2); and
controlling the movable limiting block (33) to slide within the target slide range, to limit a slide block (32) to slide on a fixed rod (31), so that the steering column (2) rotates within the target rotation range.

10. The method according to claim 9, wherein the obtaining a target rotation range of the steering column (2) comprises:

obtaining a traveling parameter of a vehicle in which the steer-by-wire system is located in a working condition and a limit rotation range of a steerable wheel of the vehicle;
using, as a rotation range of the steerable wheel, a rotation range that is obtained through calculation based on the traveling parameter and that is less than or equal to a limit rotation range of the steerable wheel; and
calculating the target rotation range of the steering column (2) based on the rotation range of the steerable wheel and a stored steering ratio, wherein

the traveling parameter comprises a vehicle speed of the vehicle and a maximum yaw rate of the vehicle in the working condition, the limit rotation range of the steerable wheel is an attribute value of the vehicle, and the steering ratio is a ratio of a rotation angle of a steering wheel (1) of the vehicle in which the steer-by-wire system is located to a rotation angle of the steerable wheel.

11. The method according to claim 9 or 10, wherein the method further comprises:

obtaining a current rotation angle of the steering column (2), a current rotation angle of the steerable wheel of the vehicle in which the steer-by-wire system is located, and a stored target correspondence between a rotation angle of the steering column (2) and the rotation angle of the steerable wheel;

when it is detected that a correspondence between the current rotation angle of the steering column (2) and the current rotation angle of the steerable wheel does not meet the target correspondence, determining that the rotation angle of the steering column (2) is inconsistent with the rotation angle of the steerable wheel;

controlling, based on a rotation angle deviation between the current rotation angle of the steering column (2) and the current rotation angle of the steerable wheel, the movable limiting block (33) to push the slide block (32) to slide on the fixed rod (31); and

when it is detected that the correspondence between the current rotation angle of the steering column (2) and the current rotation angle of the steerable wheel meets the target correspondence, determining that the rotation angle of the steering column (2) is consistent with the rotation angle of the steerable wheel, and controlling the movable limiting block (33) to stop pushing the slide block (32) to slide on the fixed rod (31).

12. The method according to any one of claims 9 to 11, wherein the method further comprises:

when it is detected that the steering wheel (1) of the vehicle in which the steer-by-wire system is located intends to return and a return driving motor (4) of the steer-by-wire system fails, controlling the movable limiting block (33) to push the slide block (32) to slide on the fixed rod (31); and

when it is detected that the steering wheel (1) returns, controlling the movable limiting block (33) to stop pushing the slide block (32) to slide on the fixed rod (31).

13. A vehicle, wherein the vehicle comprises the steer-by-wire system according to claims 1 to 8.

14. A controller, wherein the controller is configured to perform the steering control method according to any one of claims 9 to 12.

**Patentansprüche**

1. Steer-by-Wire-System, wobei das Steer-by-Wire-System eine Lenksäule (2) und eine Begrenzungseinrichtung (3) umfasst und die Begrenzungseinrichtung (3) einen festen Stab (31), einen Gleitblock (32) und einen bewegbaren Begrenzungsblock (33) umfasst; **dadurch gekennzeichnet, dass**

der Gleitblock (32) sich auf dem festen Stab (31) befindet und der Gleitblock (32) auf dem festen Stab (31) gleiten kann, während die Lenksäule (2) sich dreht; und

der bewegbare Begrenzungsblock (33) sich auf dem festen Stab (31) befindet und auf dem festen Stab (31) gleiten kann, um den Gleitblock (32) zu begrenzen, um auf dem festen Stab (31) zu gleiten, sodass die Lenksäule (2) sich innerhalb eines Zieldrehbereichs dreht.

2. Steer-by-Wire-System nach Anspruch 1, wobei die Begrenzungseinrichtung (3) ferner ein Zahnrad (34) umfasst, das Zahnrad (34) auf die Lenksäule (2) aufgeschoben ist und sich mit der Lenksäule (2) synchron dreht, der Gleitblock (32) eine Zahnstange, die mit dem Zahnrad (34) in Eingriff steht, aufweist, der Gleitblock (32) mit dem Zahnrad (34) in Eingriff steht und, wenn das Zahnrad (34) sich mit der Lenksäule (2) dreht, das Zahnrad (34) den Gleitblock (32) schiebt, um auf dem festen Stab (31) zu gleiten.

3. Steer-by-Wire-System nach Anspruch 1 oder 2, wobei der feste Stab (31) eine Schraube ist, sowohl der Gleitblock (32) als auch der bewegbare Begrenzungsblock (33) Kugelmuttern sind, sowohl der Gleitblock (32) als auch der bewegbare Begrenzungsblock (33) auf den festen Stab (31) aufgeschoben sind und der Gleitblock (32) und der bewegbare Begrenzungsblock (33) auf dem festen Stab (31) spiralförmig gleiten können.

4. Steer-by-Wire-System nach einem der Ansprüche 1 bis 3, wobei das Steer-by-Wire-System ferner einen gleitenden Antriebsmotor (35) umfasst und der bewegbare Begrenzungsblock (33) auf dem festen Stab (31) durch ein Antreiben des gleitenden Antriebsmotors (35) gleitet.

5. Steer-by-Wire-System nach einem der Ansprüche 1 bis 4, wobei der bewegbare Begrenzungsblock (33) ferner konfiguriert ist zum: wenn ein Drehwinkel der Lenksäule (2) inkonsistent mit einem Drehwinkel eines lenkbaren Rads eines Fahrzeugs, in dem das Steer-by-Wire-System sich befindet, ist, Schieben des Gleitblocks (32), um auf dem festen Stab (31) zu gleiten, sodass der Gleitblock (32) die Lenksäule (2) schiebt, um sich zu drehen, um eine Drehwinkelabweichung zwischen der Lenksäule (2) und dem lenkbaren Rad zu korrigieren.

6. Steer-by-Wire-System nach einem der Ansprüche 1 bis 5, wobei der bewegbare Begrenzungsblock (33) ferner konfiguriert ist zum: wenn erfasst wird, dass ein Lenkrad (1) des Fahrzeugs, in dem das Steer-by-Wire-System sich befindet, zurückkehren will, und ein Rückkehrantriebsmotor (4) des Steer-by-Wire-Systems ausfällt, Schieben des Gleitblocks (32), um auf dem festen Stab (31) zu gleiten, sodass der Gleitblock (32) die Lenksäule (2) schiebt, um sich zu drehen, und das Lenkrad (1) zurückkehrt.

7. Steer-by-Wire-System nach einem der Ansprüche 1 bis 6, wobei der Zieldrehbereich durch eine Berechnung basierend auf einem Drehbereich des lenkbaren Rads des Fahrzeugs, in dem das Steer-by-Wire-System sich befindet, und einem gespeicherten Lenkverhältnis spezifisch erhalten wird und das Lenkverhältnis ein Verhältnis eines Drehwinkels des Lenkrads (1) des Fahrzeugs zu einem Drehwinkel des lenkbaren Rads ist; und
der Drehbereich des lenkbaren Rads ein Drehbereich ist, der durch die Berechnung basierend auf einem Fortbewegungsparameter des Fahrzeugs in einem Betriebszustand erhalten wird und der kleiner als oder gleich einem Grenzdrehbereich des lenkbaren Rads ist, der Fortbewegungsparameter eine Fahrzeuggeschwindigkeit des Fahrzeugs und eine maximale Gierrate des Fahrzeugs in dem Betriebszustand umfasst und der Grenzdrehbereich des lenkbaren Rads ein Attributwert des Fahrzeugs ist.

8. Steer-by-Wire-System nach einem der Ansprüche 1 bis 7, wobei das Steer-by-Wire-System ferner einen festen Begrenzungsblock (36) umfasst; der feste Begrenzungsblock (36) an einem Ende des festen Stabs (31) befestigt ist und konfiguriert ist, um den bewegbaren Begrenzungsblock (33) zu begrenzen, um auf dem festen Stab (31) zu gleiten, um die Lenksäule (2) zu begrenzen, um sich innerhalb eines Grenzdrehbereichs zu drehen; und der Grenzdrehbereich der Lenksäule (2) ein maximaler Zieldrehbereich der Lenksäule (2) ist und durch die Berechnung basierend auf dem Grenzdrehbereich des lenkbaren Rads des Fahrzeugs, in dem das Steer-by-Wire-System sich befindet, erhalten wird.

9. Lenksteuerverfahren, wobei das Verfahren auf das Steer-by-Wire-System nach einem der Ansprüche 1 bis 8 angewendet wird und das Verfahren umfasst:

   Erhalten eines Zieldrehbereichs einer Lenksäule (2);
   Erhalten, basierend auf einer Entsprechung zwischen einem Drehbereich der Lenksäule (2) und einem Gleitbereich eines bewegbaren Begrenzungsblocks (33), eines Zielgleitbereichs, der von dem bewegbaren Begrenzungsblock (33) ist und der dem Zieldrehbereich der Lenksäule (2) entspricht; und
   Steuern des bewegbaren Begrenzungsblocks (33), um innerhalb des Zielgleitbereichs zu gleiten, um einen Gleitblock (32) zu begrenzen, um auf einem festen Stab (31) zu gleiten, sodass die Lenksäule (2) sich innerhalb des Zieldrehbereichs dreht.

10. Verfahren nach Anspruch 9, wobei das Erhalten eines Zieldrehbereichs der Lenksäule (2) umfasst:

    Erhalten eines Fortbewegungsparameters eines Fahrzeugs, in dem das Steer-by-Wire-System sich befindet, in einem Betriebszustand und eines Grenzdrehbereichs eines lenkbaren Rads des Fahrzeugs;
    Verwenden, als ein Drehbereich des lenkbaren Rads, eines Drehbereichs, der durch die Berechnung basierend auf dem Fortbewegungsparameter erhalten wird und der kleiner als oder gleich einem Grenzdrehbereich des lenkbaren Rads ist; und
    Berechnen des Zieldrehbereichs der Lenksäule (2) basierend auf dem Drehbereich des lenkbaren Rads und einem gespeicherten Lenkverhältnis, wobei der Fortbewegungsparameter eine Fahrzeuggeschwindigkeit des Fahrzeugs und eine maximale Gierrate des Fahrzeugs in dem Betriebszustand umfasst, der Grenzdrehbereich des lenkbaren Rads ein Attributwert des Fahrzeugs ist und das Lenkverhältnis ein Verhältnis eines Drehwinkels eines Lenkrads (1) des Fahrzeugs, in dem das Steer-by-Wire-System sich befindet, zu einem Drehwinkel des lenkbaren Rads ist.

**11.** Verfahren nach Anspruch 9 oder 10, wobei das Verfahren ferner umfasst:

Erhalten eines aktuellen Drehwinkels der Lenksäule (2), eines aktuellen Drehwinkels des lenkbaren Rads des Fahrzeugs, in dem das Steer-by-Wire-System sich befindet, und einer gespeicherten Zielentsprechung zwischen einem Drehwinkel der Lenksäule (2) und dem Drehwinkel des lenkbaren Rads;
wenn erfasst wird, dass eine Entsprechung zwischen dem aktuellen Drehwinkel der Lenksäule (2) und dem aktuellen Drehwinkel des lenkbaren Rads die Zielentsprechung nicht erfüllt, Bestimmen, dass der Drehwinkel der Lenksäule (2) mit dem Drehwinkel des lenkbaren Rads inkonsistent ist;
Steuern, basierend auf einer Drehwinkelabweichung zwischen dem aktuellen Drehwinkel der Lenksäule (2) und dem aktuellen Drehwinkel des lenkbaren Rads, des bewegbaren Begrenzungsblocks (33), um den Gleitblock (32) zu schieben, um auf dem festen Stab (31) zu gleiten; und
wenn erfasst wird, dass die Entsprechung zwischen dem aktuellen Drehwinkel der Lenksäule (2) und dem aktuellen Drehwinkel des lenkbaren Rads die Zielentsprechung erfüllt, Bestimmen, dass der Drehwinkel der Lenksäule (2) mit dem Drehwinkel des lenkbaren Rads konsistent ist, und Steuern des bewegbaren Begrenzungsblocks (33), um ein Schieben des Gleitblocks (32), um auf dem festen Stab (31) zu gleiten, zu stoppen.

**12.** Verfahren nach einem der Ansprüche 9 bis 11, wobei das Verfahren ferner umfasst:

wenn erfasst wird, dass das Lenkrad (1) des Fahrzeugs, in dem das Steer-by-Wire-System sich befindet, zurückkehren will, und ein Rückkehrantriebsmotor (4) des Steer-by-Wire-Systems ausfällt, Steuern des bewegbaren Begrenzungsblocks (33), um den Gleitblock (32) zu schieben, um auf dem festen Stab (31) zu gleiten; und
wenn erfasst wird, dass das Lenkrad (1) zurückkehrt, Steuern des bewegbaren Begrenzungsblocks (33), um das Schieben des Gleitblocks (32), um auf dem festen Stab (31) zu gleiten, zu stoppen.

**13.** Fahrzeug, wobei das Fahrzeug das Steer-by-Wire-System nach den Ansprüchen 1 bis 8 umfasst.

**14.** Steuerung, wobei die Steuerung konfiguriert ist, um das Lenksteuerverfahren nach einem der Ansprüche 9 bis 12 durchzuführen.

## Revendications

**1.** Système de direction par câble, dans lequel le système de direction par câble comprend une colonne de direction (2) et un dispositif de limitation (3), et le dispositif de limitation (3) comprend une tige fixe (31), un bloc coulissant (32), et un bloc de limitation mobile (33) ;
**caractérisé en ce que**

le bloc coulissant (32) est situé sur la tige fixe (31), et le bloc coulissant (32) peut glisser sur la tige fixe (31) lorsque la colonne de direction (2) tourne ; et
le bloc de limitation mobile (33) est situé sur la tige fixe (31) et peut glisser sur la tige fixe (31), pour limiter le glissement du bloc coulissant (32) sur la tige fixe (31), de sorte que la colonne de direction (2) tourne à l'intérieur d'une plage de rotation cible.

**2.** Système de direction par câble selon la revendication 1, dans lequel le dispositif de limitation (3) comprend en outre un engrenage (34), l'engrenage (34) est manchonné sur la colonne de direction (2) et tourne de manière synchronisée avec la colonne de direction (2), le bloc coulissant (32) a une crémaillère qui vient en prise avec l'engrenage (34), le bloc coulissant (32) vient en prise avec l'engrenage (34), et lorsque l'engrenage (34) tourne avec la colonne de direction (2), l'engrenage (34) pousse le bloc coulissant (32) à coulisser sur la tige fixe (31).

**3.** Système de direction par câble selon la revendication 1 ou 2, dans lequel la tige fixe (31) est une vis, le bloc coulissant (32) et le bloc de limitation mobile (33) sont des écrous à billes, le bloc coulissant (32) et le bloc de limitation mobile (33) sont manchonnés sur la tige fixe (31), et le bloc coulissant (32) et le bloc de limitation mobile (33) peuvent glisser en spirale sur la tige fixe (31).

**4.** Système de direction par câble selon l'une quelconque des revendications 1 à 3, dans lequel le système de direction par câble comprend en outre un moteur d'entraînement coulissant (35), et le bloc de limitation mobile (33) glisse sur la tige fixe (31) grâce à l'entraînement du moteur d'entraînement coulissant (35).

5. Système de direction par câble selon l'une des revendications 1 à 4, dans lequel le bloc de limitation mobile (33) est en outre conçu pour : lorsqu'un angle de rotation de la colonne de direction (2) est incompatible avec un angle de rotation d'une roue directrice d'un véhicule dans lequel le système de direction par câble est situé, pousser le bloc coulissant (32) à glisser sur la tige fixe (31), de sorte que le bloc coulissant (32) pousse la colonne de direction (2) à tourner, afin de corriger un écart d'angle de rotation entre la colonne de direction (2) et la roue directrice.

6. Système de direction par câble selon l'une quelconque des revendications 1 à 5, dans lequel le bloc de limitation mobile (33) est en outre conçu pour : lorsqu'il est détecté qu'un volant (1) du véhicule dans lequel le système de direction par câble est situé a l'intention de revenir et qu'un moteur d'entraînement de retour (4) du système de direction par câble tombe en panne, le fait de pousser le bloc coulissant (32) à glisser sur la tige fixe (31), de sorte que le bloc coulissant (32) pousse la colonne de direction (2) à tourner, et que le volant (1) revient.

7. Système de direction par câble selon l'une quelconque des revendications 1 à 6, dans lequel la plage de rotation cible est spécifiquement obtenue par un calcul sur la base d'une plage de rotation de la roue directrice du véhicule dans lequel le système de direction par câble est situé et un rapport de direction stocké, et le rapport de direction est un rapport d'un angle de rotation du volant (1) du véhicule à un angle de rotation de la roue directrice ; et la plage de rotation de la roue directrice est une plage de rotation obtenue par calcul sur la base d'un paramètre de déplacement du véhicule dans une condition de travail et qui est inférieure ou égale à une plage de rotation limite de la roue directrice, le paramètre de déplacement comprend une vitesse de véhicule du véhicule et une vitesse de lacet maximale du véhicule dans la condition de travail, et la plage de rotation limite de la roue directrice est une valeur d'attribut du véhicule.

8. Système de direction par câble selon l'une quelconque des revendications 1 à 7, dans lequel le système de direction par câble comprend en outre un bloc de limitation fixe (36) ; le bloc de limitation fixe (36) est fixé à une extrémité de la tige fixe (31), et est conçu pour limiter le glissement du bloc de limitation mobile (33) sur la tige fixe (31), afin de limiter la rotation de la colonne de direction (2) à l'intérieur d'une plage de rotation limitée ; et la plage de rotation limite de la colonne de direction (2) est une plage de rotation cible maximale de la colonne de direction (2), et est obtenue par calcul sur la base de la plage de rotation limite de la roue directrice du véhicule dans lequel se trouve le système de direction par câble.

9. Procédé de commande de direction, dans lequel le procédé est appliqué au système de direction par câble selon l'une quelconque des revendications 1 à 8, et le procédé comprend :

l'obtention d'une plage de rotation cible d'une colonne de direction (2) ;
l'obtention, sur la base d'une correspondance entre une plage de rotation de la colonne de direction (2) et une plage de glissement d'un bloc de limitation mobile (33), d'une plage de glissement cible qui est du bloc de limitation mobile (33) et qui correspond à la plage de rotation cible de la colonne de direction (2) ; et
la commande du bloc de limitation mobile (33) pour qu'il glisse dans la plage de glissement cible, afin de limiter le glissement d'un bloc de glissement (32) sur une tige fixe (31), de sorte que la colonne de direction (2) tourne dans la plage de rotation cible.

10. Procédé selon la revendication 9, dans lequel l'obtention d'une plage de rotation cible de la colonne de direction (2) comprend :

l'obtention d'un paramètre de déplacement d'un véhicule dans lequel le système de direction par câble est situé dans un état de fonctionnement et une plage de rotation limite d'une roue directrice du véhicule ;
l'utilisation, comme plage de rotation de la roue directrice, d'une plage de rotation obtenue par calcul sur la base du paramètre de déplacement et qui est inférieure ou égale à une plage de rotation limite de la roue directrice ; et
le calcul de la plage de rotation cible de la colonne de direction (2) sur la base de la plage de rotation de la roue directrice et d'un rapport de direction mémorisé, dans lequel
le paramètre de déplacement comprend une vitesse du véhicule et une vitesse maximale de lacet du véhicule dans les conditions de travail, la plage de rotation limite de la roue directrice est une valeur d'attribut du véhicule, et le rapport de direction est un rapport entre un angle de rotation d'un volant (1) du véhicule dans lequel se trouve le système de direction par câble et un angle de rotation de la roue directrice.

11. Procédé selon la revendication 9 ou 10, dans lequel le procédé comprend en outre :

l'obtention d'un angle de rotation actuel de la colonne de direction (2), d'un angle de rotation actuel de la roue directrice du véhicule dans lequel se trouve le système de direction par câble, et d'une correspondance cible mémorisée entre un angle de rotation de la colonne de direction (2) et de l'angle de rotation de la roue directrice ;

lorsqu'il est détecté qu'une correspondance entre l'angle de rotation actuel de la colonne de direction (2) et l'angle de rotation actuel de la roue directrice ne correspond pas à la correspondance cible, la détermination que l'angle de rotation de la colonne de direction (2) n'est pas cohérent avec l'angle de rotation de la roue directrice ;

la commande, sur la base d'un écart d'angle de rotation entre l'angle de rotation actuel de la colonne de direction (2) et l'angle de rotation actuel de la roue directrice, du bloc de limitation mobile (33) afin de pousser le bloc coulissant (32) pour qu'il glisse sur la tige fixe (31) ; et

lorsqu'il est détecté que la correspondance entre l'angle de rotation actuel de la colonne de direction (2) et l'angle de rotation actuel de la roue directrice est conforme à la correspondance cible, la détermination que l'angle de rotation de la colonne de direction (2) est compatible avec l'angle de rotation de la roue directrice, et la commande du bloc de limitation mobile (33) pour arrêter de pousser le bloc de glissement (32) à glisser sur la tige fixe (31).

12. Procédé selon l'une quelconque des revendications 9 à 11, dans lequel le procédé comprend en outre :

lorsqu'il est détecté que le volant (1) du véhicule dans lequel se trouve le système de direction par câble a l'intention de revenir et qu'un moteur d'entraînement de retour (4) du système de direction par câble tombe en panne, la commande du bloc de limitation mobile (33) pour qu'il pousse le bloc coulissant (32) à glisser sur la tige fixe (31) ; et

lorsqu'il est détecté que le volant (1) revient, la commande du bloc de limitation mobile (33) pour qu'il cesse de pousser le bloc coulissant (32) à glisser sur la tige fixe (31).

13. Véhicule, dans lequel le véhicule comprend le système de direction par câble selon les revendications 1 à 8.

14. Dispositif de commande, dans lequel le dispositif de commande est configuré pour effectuer le procédé de commande de direction selon l'une quelconque des revendications 9 à 12.

FIG. 1

FIG. 2

FIG. 3

FIG. 4

FIG. 5

FIG. 6

EP 4 183 663 B1

FIG. 7

FIG. 8

EP 4 183 663 B1

FIG. 9

FIG. 10

28

FIG. 11

| Obtain a rotation range of a steerable wheel of a vehicle in which a steer-by-wire system is located, and calculate a target rotation range of a steering wheel 1 based on the rotation range of the steerable wheel |
|---|

111

| Obtain, based on a correspondence between a rotation range of the steering wheel 1 and a slide range of a movable limiting block 33, a target slide range that is of the movable limiting block 33 and that corresponds to the target rotation range of the steering wheel 1 |
|---|

112

| Control the movable limiting block 33 to slide within the target slide range, to limit a slide block 32 to slide on a fixed rod 31, so that the steering wheel 1 rotates within the target rotation range |
|---|

113

FIG. 12

```
                        ┌──────────────┐
                        │    Start     │
                        └──────┬───────┘
                               │
                               ▼
                      ╱────────────────╲
            Yes      ╱      Whether       ╲
         ◄──────────       a rotation angle of      ╲ ─── 121
                    ╲   a steering wheel is consistent   ╱
                     ╲   with a rotation angle of a    ╱
                      ╲      steerable wheel        ╱
                       ╲────────────────╱
                               │ No
              ┌────────────────┴────────────────┐
              ▼                                  ▼
        ╱──────────╲                       ╱──────────╲
       ╱ The steering ╲                   ╱ The steering ╲
 123 ─ ╱ wheel deflects clockwise ╲       ╱ wheel deflects ╲ ─ 122
       ╲ relative to the steerable ╱      ╲ counterclockwise relative ╱
        ╲   wheel   ╱                       ╲ to the steerable ╱
         ╲──────────╱                        ╲  wheel  ╱
              │ Yes                              │ Yes
              ▼                                  ▼
```

|  |  |
|---|---|
| 125 — Start a slide driving motor on a left side of the slide block, to drive a movable limiting block on the left side to push the slide block to slide rightward, so that the steering column drives the steering wheel to rotate counterclockwise, to correct a rotation angle deviation between the steering wheel and the steerable wheel | Start a slide driving motor on a right side of a slide block, to drive a movable limiting block on the right side to push the slide block to slide leftward, so that a steering column drives the steering wheel to rotate clockwise, to correct a rotation angle deviation between the steering wheel and the steerable wheel — 124 |

```
              │                                  │
              └────────────────┬─────────────────┘
                               ▼
                    ┌────────────────────┐
                    │ The rotation angle of the │
                    │ steering wheel is consistent │ ─ 126
                    │ with the rotation angle of │
                    │ the steerable wheel │
                    └──────────┬─────────┘
                               ▼
                        ┌──────────────┐
                        │     End      │
                        └──────────────┘
```

FIG. 13

```
                              ┌──────────┐
                              │  Start   │
                              └──────────┘
```

FIG. 14

```
                        ┌─────────────────┐
                        │  Failure mode   │
                        └─────────────────┘
```

141 — Whether a slide driving motor fails

Whether a return driving motor fails — 143

Yes

Yes

142 — Fixed limiting blocks located on both sides of a slide block limit sliding of the slide block, to limit rotation of a steering wheel

A movable limiting block pushes the slide block to slide on a fixed rod, so that a steering column drives the steering wheel to automatically return — 144

FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102013014133 B3